# EUROPEAN PATENT SPECIFICATION

(11) **EP 2 993 835 B1**
(45) Date of publication and mention of the grant of the patent: **11.07.2018**
(21) Application number: 13885260.3
(22) Date of filing: 23.05.2013
(51) Int. Cl.: H04L 12/70, H04L 12/751, H04L 12/721, H04L 12/851, H04L 12/64

(54) **SERVICE ROUTING SYSTEM, DEVICE AND METHOD**
DIENSTROUTINGSYSTEM, -VORRICHTUNG UND -VERFAHREN
SYSTÈME, DISPOSITIF ET PROCÉDÉ DE ROUTAGE DE SERVICE

(43) Date of publication of application: 09.03.2016
(73) Proprietor: Huawei Technologies Co., Ltd., Longgang District Shenzhen, Guangdong 518129 (CN)
(72) Inventor: WANG, Yan, Shenzhen Guangdong 518129 (CN); HU, Weihua, Shenzhen Guangdong 518129 (CN); JIANG, Ming, Shenzhen Guangdong 518129 (CN); QIAN, Tao, Shenzhen Guangdong 518129 (CN)
(74) Representative: Pfenning, Meinig & Partner mbB
(86) International application number: PCT/CN2013/076148
(87) International publication number: WO 2014/186963

(56) References cited:
- EP-A1- 2 582 098
- CN-A- 1 901 498
- CN-A- 102 195 855
- CN-A- 102 571 602
- US-A1- 2010 082 737
- US-A1- 2011 261 825
- US-B2- 8 001 214
- D.A ET AL: "A Policy-aware Switching Layer for Data Centers", , 24 June 2008 (2008-06-24), XP055067840, Retrieved from the Internet: URL:http://ccr.sigcomm.org/online/files/p5 1-josephA.pdf [retrieved on 2013-06-21]
- "Cisco Nexus 1000V Series Switches: Deploy Cisco vPath Service-Chaining Architecture - White Paper", , 1 August 2012 (2012-08-01), pages 1-4, XP055089428, Retrieved from the Internet: URL:http://www.cisco.com/en/US/prod/collat eral/switches/ps9441/ps9902/white_paper_c1 1-713736.pdf [retrieved on 2013-11-20]
- XIANG Z ET AL: "Peer-to-Peer Based Multimedia Distribution Service", IEEE TRANSACTIONS ON MULTIMEDIA, IEEE SERVICE CENTER, PISCATAWAY, NJ, US, vol. 6, no. 2, 1 April 2004 (2004-04-01), pages 343-355, XP011109145, ISSN: 1520-9210, DOI: 10.1109/TMM.2003.822819

## Description

### TECHNICAL FIELD

The present invention relates to the communications field, and specifically, to a service routing system, device, and method.

### BACKGROUND

Because deployment of a value-added service helps perform more accurate pipeline management on Gi interface data of a mobile gateway and improve an effect of user experience, some mainstream operators have already use a solution of connecting various value-added service servers in series to deploy a value-added service. Specifically, various value-added service servers are connected in series between a mobile gateway and a server, so that all service flows pass through each value-added service server. These value-added service servers may also be referred to as service enablers (Service enabler), and may include a video optimizer, a service flow compressor, a data cache, a deep packet inspector, an Hypertext Transfer Protocol (HyperText Transfer Protocol, HTTP) header enhancer, and the like.

However, in this deployment solution, because all service enablers are connected in series between the mobile gateway and the server, a failure of any service enabler may cause that a user cannot use even a basic service. In addition, each service enabler performs processing on a service flow regardless of a need, which increases a time for processing the service flow. It can be seen that this solution not only reduces network reliability, but also greatly increases a network delay. US2011261825A1 discloses an OpenFlow switch controls transmission and reception of a packet according to a flow entry.

EP2582098A1 provides a service routing method and a system on a service overlay network, which relate to the field of communications, and may efficiently adapt to the dynamic characteristic of the service overlay network.

"A policy-aware switching layer for data centers" (Dilip A. Joseph et al. http://ccr.sigcomm.org/online/files/p51-josephA.pdf) proposes the policy aware switching layer or PLayer, a new layer-2 for data centers consisting of inter-connected policy-aware switches or pswitches. Unmodified middleboxes are placed off into the network path by plugging them into pswitches. Based on policies specified by administrators, pswitches explicitly forward different types of traffic through different sequences of middleboxes.

"Cisco Nexus 1000V Series Switches: Deploy Cisco vPath Service-Chaining Architecture- White Paper" (http//:www.cisco.com/c/en/us/products/collateral/switches/nexus-1000v-switch-vmw are-vsphere/white_paper_c11-1-713736.html) provides a programmable architecture for insretion and removal of network services.

"Peer-to-Peer Based Multimedia Distribution Service" (Xiang et al. IEEE TRANSACTIONS ON MULTIMEDIA, VOL. 6, NO. 2, APRIL 2004) proposes a framework for multi-media distribution service based on a P2P network.

### SUMMARY

Embodiments of the present invention provide a service routing system, device, and method, which can improve network reliability and reduce a network delay.

According to a first aspect, a service routing system is provided, including: a first service flow classifier, a service path controller, h programmable switches, and m service enablers, where there is a first interface between the first service flow classifier and the service path controller, there is a second interface between the service path controller and each of the h programmable switches, there is a third interface between the first service flow classifier and the j^{th} programmable switch of the h programmable switches, each service enabler of the m service enablers is connected to one of the h programmable switches, and the h programmable switches are interconnected; where the first service flow classifier is configured to generate a notification message according to a service flow, where the notification message includes service flow category information corresponding to the service flow, the service flow category information is used to indicate a first service chain corresponding to the service flow, the first service chain includes k service enablers of the m service enablers, and the k service enablers in the first service chain are arranged according to a first sequence; the service path controller is configured to: receive the notification message from the first service flow classifier by using the first interface, and generate, according to the notification message, a first forwarding entry corresponding to each programmable switch of i programmable switches, where the i programmable switches are connected to at least one of the k service enablers, and the i programmable switches are selected from the h programmable switches; and each programmable switch of the i programmable switches is configured to: receive the first forwarding entry corresponding to each programmable switch from the service path controller by using the second interface, and forward a data packet of the service flow according to the first forwarding entry corresponding to each programmable switch, so that the k service enablers process the data packet of the service flow according to the first sequence; where h, m, and j are all positive integers, k is a positive integer less than or equal to m, and i is a positive integer less than or equal to h.

With reference to the first aspect, in a first possible implementation manner, the notification message further includes service flow information corresponding to the service flow, and the service flow information includes at least one of the following: a source Media Access Control MAC address, a destination MAC address, a source Internet Protocol IP address, a destination IP address, a source port number, a destination port number, and a protocol type.

With reference to the first possible implementation manner of the first aspect, in a second possible implementation manner, the service flow category information includes a first service chain table, and the first service chain table is used to indicate the first service chain; and
the service path controller is specifically configured to: generate, according to topology information of the service routing system, the first service chain table, and the service flow information, the first forwarding entry corresponding to each programmable switch of the i programmable switches, where the topology information is used to indicate an internal topology structure of the service routing system and an external connection relationship of the service routing system.

With reference to the first possible implementation manner of the first aspect, in a third possible implementation manner, the service flow category information includes a first application category identifier, and the first application category identifier is used to indicate an application category of the service flow; and
the service path controller is specifically configured to: determine, according to the first application category identifier and a correspondence between at least one application category identifier and at least one service chain table, a first service chain table corresponding to the first application category identifier, where the first service chain table is used to indicate the first service chain; and generate, according to topology information of the service routing system, the first service chain table, and the service flow information, the first forwarding entry corresponding to each programmable switch of the i programmable switches, where the topology information is used to indicate an internal topology structure of the service routing system and an external connection relationship of the service routing system.

With reference to the first aspect, in a fourth possible implementation manner, the service flow category information includes a first application category identifier, and the first application category identifier is used to indicate an application category of the service flow; and
the service path controller is specifically configured to: determine, according to the first application category identifier and a correspondence between at least one application category identifier and at least one service chain table, a first service chain table corresponding to the first application category identifier, where the first service chain table is used to indicate the first service chain; and generate, according to topology information of the service routing system, the first service chain table, and the first application category identifier, the first forwarding entry corresponding to each programmable switch of the i programmable switches, where the first forwarding entry includes the first application category identifier, and the topology information is used to indicate an internal topology structure of the service routing system and an external connection relationship of the service routing system.

With reference to the fourth possible implementation manner of the first aspect, in a fifth possible implementation manner, the first service flow classifier is further configured to encapsulate the data packet of the service flow according to the first application category identifier.

With reference to any implementation manner of the third possible implementation manner to the fifth possible implementation manner of the first aspect, in a sixth possible implementation manner, the service path controller is further configured to receive service routing rule information before generating the first forwarding entry corresponding to each programmable switch of the i programmable switches, where the service routing rule information includes the at least one application category identifier, the at least one service chain table, and the correspondence.

With reference to any implementation manner of the third possible implementation manner to the fifth possible implementation manner of the first aspect, in a seventh possible implementation manner, the service path controller is specifically configured to: receive service routing rule information before generating the first forwarding entry corresponding to each programmable switch of the i programmable switches, where the service routing rule information is used to instruct to perform adjustment processing on the correspondence, and the adjustment processing includes at least one of the following: adding, deleting, and modifying; and perform adjustment processing on the correspondence according to the service routing rule information.

With reference to the sixth possible implementation manner or the seventh possible implementation manner of the first aspect, in an eighth possible implementation manner, the first service flow classifier is further configured to acquire the service routing rule information, and the service path controller is specifically configured to receive the service routing rule information from the first service flow classifier by using the first interface; or the service path controller is specifically configured to receive the service routing rule information from a policy and charging rules function PCRF device.

With reference to the eighth possible implementation manner of the first aspect, in a ninth possible implementation manner, the first service flow classifier is specifically configured to receive the service routing rule information from the PCRF device.

With reference to the first aspect or the first possible implementation manner or the ninth possible implementation manner of the first aspect, in a tenth possible implementation manner, the j^{th} programmable switch is configured to: before the first service flow classifier generates the notification message according to the service flow, send the first n data packets of the service flow to the first service flow classifier by using the third interface, where n is a positive integer; and the first service flow classifier is specifically configured to determine the notification message according to the first n data packets.

With reference to the tenth possible implementation manner of the first aspect, in an eleventh possible implementation manner, the j^{th} programmable switch is further configured to receive the first data packet of the service flow before sending, by using the third interface, the first n data packets to the first service flow classifier; the service path controller is further configured to: receive information about the first data packet from the j^{th} programmable switch by using the second interface, and whenit is determined that the first data packet needs to be forwarded to the first service flow classifier, generate a second forwarding entry according to the information about the first data packet, where the second forwarding entry is used to instruct to forward the data packet of the service flow to the first service flow classifier; the j^{th} programmable switch is further configured to receive the second forwarding entry from the service path controller by using the second interface; and the j^{th} programmable switch is specifically configured to forward the first n data packets to the first service flow classifier according to the second forwarding entry by using the third interface.

With reference to the eleventh possible implementation manner of the first aspect, in a twelfth possible implementation manner, there is a fourth interface between the j^{th} programmable switch and a mobile gateway; and the j^{th} programmable switch is specifically configured to receive the first data packet from the mobile gateway by using the fourth interface.

With reference to the first aspect or the first possible implementation manner or the twelfth possible implementation manner of the first aspect, in a thirteenth possible implementation manner, the first service flow classifier is located between the mobile gateway and the j^{th} programmable switch; or the first service flow classifier is located inside the mobile gateway.

With reference to the first aspect or the first possible implementation manner or the thirteenth possible implementation manner of the first aspect, in a fourteenth possible implementation manner, the system further includes a second service flow classifier; and there is the first interface between the second service flow classifier and the service path controller, there is the third interface between the second service flow classifier and the p^{th} programmable switch of the h programmable switches, and p is a positive integer less than or equal to h.

According to a second aspect, a service path controller is provided, including: a receiving unit, a generating unit, and a sending unit, where there is a first interface between the receiving unit and a first service flow classifier; the receiving unit is configured to receive a notification message from the first service flow classifier by using the first interface, where the notification message includes service flow category information corresponding to a service flow, the service flow category information is used to indicate a first service chain corresponding to the service flow, and the first service chain includes one or more service enablers that are arranged according to a first sequence; the generating unit is configured to generate, according to the notification message, a first forwarding entry corresponding to each of one or more programmable switches; and the sending unit is configured to send the first forwarding entry corresponding to each programmable switch to the one or more programmable switches, so that the programmable switch forwards a data packet of the service flow according to the first forwarding entry corresponding to the programmable switch, and the one or more service enablers process the data packet of the service flow according to the first sequence.

With reference to the second aspect, in a first possible implementation manner, there is a second interface between the sending unit and each of h programmable switches; the first service chain includes k service enablers of m service enablers, where the k service enablers in the first service chain are arranged according to the first sequence; and
the generating unit is specifically configured to generate, according to the notification message, a first forwarding entry corresponding to each programmable switch of i programmable switches, where the i programmable switches are connected to at least one of the k service enablers, and the i programmable switches are selected from the h programmable switches; where h and m are positive integers, k is a positive integer less than or equal to m, and i is a positive integer less than or equal to h.

With reference to the first possible implementation manner of the second aspect, in a second possible implementation manner, the notification message further includes service flow information corresponding to the service flow, and the service flow information includes at least one of the following: a source Media Access Control MAC address, a destination MAC address, a source Internet Protocol IP address, a destination IP address, a source port number, a destination port number, and a protocol type.

With reference to the second possible implementation manner of the second aspect, in a third possible implementation manner, the service flow category information includes a first service chain table, and the first service chain table is used to indicate the first service chain; and the generating unit is specifically configured to generate, according to topology information of a service routing system in which the service path controller is located, the first service chain table, and the service flow information, the first forwarding entry corresponding to each programmable switch of the i programmable switches.

With reference to the second possible implementation manner of the second aspect, in a fourth possible implementation manner, the service flow category information includes a first application category identifier, and the first application category identifier is used to indicate an application category of the service flow; and
the generating unit is specifically configured to: determine, according to the first application category identifier and a correspondence between at least one application category identifier and at least one service chain table, a first service chain table corresponding to the first application category identifier, where the first service chain table is used to indicate the first service chain; and generate, according to topology information of the service routing system, the first service chain table, and the service flow information, the first forwarding entry corresponding to each programmable switch of the i programmable switches.

With reference to the first possible implementation manner of the second aspect, in a fifth possible implementation manner, the service flow category information includes a first application category identifier; and
the generating unit is specifically configured to: determine, according to the first application category identifier and a correspondence between at least one application category identifier and at least one service chain table, a first service chain table corresponding to the first application category identifier, where the first service chain table is used to indicate the first service chain; and
generate, according to topology information of the service routing system, the first service chain table, and the first application category identifier, the first forwarding entry corresponding to each programmable switch of the i programmable switches, where the first forwarding entry includes the first application category identifier.

With reference to the fourth possible implementation manner or the fifth possible implementation manner of the second aspect, in a sixth possible implementation manner, the receiving unit is further configured to receive service routing rule information before the generating unit generates the first forwarding entry corresponding to each programmable switch of the i programmable switches, where the service routing rule information includes the at least one application category identifier, the at least one service chain table, and the correspondence.

With reference to the fourth possible implementation manner or the fifth possible implementation manner of the second aspect, in a seventh possible implementation manner, the receiving unit is further configured to receive service routing rule information before the generating unit generates the first forwarding entry corresponding to each programmable switch of the i programmable switches, where the service routing rule information is used to instruct to perform adjustment processing on the correspondence, and the adjustment processing includes at least one of the following: adding, deleting, and modifying; and the generating unit is further configured to perform adjustment processing on the correspondence according to the service routing rule information.

With reference to the sixth possible implementation manner or the seventh possible implementation manner of the second aspect, in an eighth possible implementation manner, the receiving unit is specifically configured to receive the service routing rule information from the first service flow classifier by using the first interface; or the receiving unit is specifically configured to receive the service routing rule information from a policy and charging rules function PCRF device.

With reference to any implementation manner of the first possible implementation manner to the eighth possible implementation manner of the second aspect, in a ninth possible implementation manner, the receiving unit is further configured to receive information about the data packet of the service flow from the j^{th} programmable switch of the h programmable switches by using the second interface, where there is a third interface between the j^{th} programmable switch and the first service flow classifier; the generating unit is further configured to: when the data packet of the service flow needs to be forwarded to the first service flow classifier, generate a second forwarding entry according to the information about the data packet of the service flow, where the second forwarding entry is used to instruct to forward the data packet of the service flow to the first service flow classifier; and the sending unit is further configured to send the second forwarding entry to the j^{th} programmable switch by using the second interface, so that the j^{th} programmable switch forwards the data packet of the service flow to the first service flow classifier according to the second forwarding entry, and the first service flow classifier generates the notification message according to the data packet of the service flow.

With reference to the ninth possible implementation manner of the second aspect, in a tenth possible implementation manner, a forwarding entry corresponding to the data packet of the service flow does not exist on the j^{th} programmable switch; or a forwarding entry corresponding to the data packet of the service flow on the j^{th} programmable switch instructs the j^{th} programmable switch to send the information about the data packet of the service flow to the service path controller.

With reference to the second aspect or any implementation manner of the first possible implementation manner to the tenth possible implementation manner of the second aspect, in an eleventh possible implementation manner, there is also the first interface between the receiving unit and a second service flow classifier.

According to a third aspect, a service flow classifier is provided, including: a generating unit and a sending unit, where there is a first interface between the sending unit and a service path controller; the generating unit is configured to generate a notification message according to a service flow, where the notification message includes service flow category information corresponding to the service flow, the service flow category information is used to indicate a first service chain corresponding to the service flow, and the first service chain includes one or more service enablers that are arranged according to a first sequence; and the sending unit is configured to send the notification message to the service path controller by using the first interface.

With reference to the third aspect, in a first possible implementation manner, the first service chain includes k service enablers of m service enablers, where the k service enablers in the first service chain are arranged according to the first sequence, m is a positive integer, and k is a positive integer less than or equal to m.

With reference to the third aspect or the first possible implementation manner of the third aspect, in a second possible implementation manner, the notification message further includes service flow information corresponding to the service flow, and the service flow information includes at least one of the following: a source Media Access Control MAC address, a destination MAC address, a source Internet Protocol IP address, a destination IP address, a source port number, a destination port number, and a protocol type; and
the service flow category information includes a first service chain table, where the first service chain table is used to indicate the first service chain; or the service flow category information includes a first application category identifier, where the first application category identifier is used to indicate an application category of the service flow.

With reference to the third aspect or the first possible implementation manner of the third aspect, in a third possible implementation manner, the service flow classifier further includes an encapsulating unit, where the service flow category information includes a first application category identifier, the first application category identifier is used to indicate an application category of the service flow, and the first application category identifier is corresponding to the first service chain; and the encapsulating unit is configured to encapsulate a data packet of the service flow according to the first application category identifier.

With reference to the third aspect or the first possible implementation manner or the second possible implementation manner or the third possible implementation manner of the third aspect, in a fourth possible implementation manner, the service flow classifier further includes a receiving unit, where there is a third interface between the receiving unit and the j^{th} programmable switch of h programmable switches, h is a positive integer, and j is a positive integer less than or equal to h; the receiving unit is configured to receive the data packet of the service flow from the j^{th} programmable switch by using the third interface, where n is a positive integer; and the determining unit is specifically configured to generate the notification message according to the data packet of the service flow.

According to a fourth aspect, a service routing method is provided, including: receiving a notification message from a first service flow classifier, where the notification message includes service flow category information corresponding to a service flow, the service flow category information is used to indicate a first service chain corresponding to the service flow, and the first service chain includes one or more service enablers that are arranged according to a first sequence; generating, according to the notification message, a first forwarding entry corresponding to each of one or more programmable switches; and sending the first forwarding entry corresponding to each programmable switch to the one or more programmable switches, so that the programmable switch forwards a data packet of the service flow according to the first forwarding entry corresponding to the programmable switch, and the one or more service enablers process the data packet of the service flow according to the first sequence.

With reference to the fourth aspect, in a first possible implementation manner, the first service chain includes k service enablers of m service enablers, and the k service enablers in the first service chain are arranged according to the first sequence; and
the generating, according to the notification message, a first forwarding entry corresponding to each of one or more programmable switches includes: generating, according to the notification message, a first forwarding entry corresponding to each programmable switch of i programmable switches, where the i programmable switches are connected to at least one of the k service enablers, the i programmable switches are selected from h programmable switches, h and m are positive integers, k is a positive integer less than or equal to m, and i is a positive integer less than or equal to h.

With reference to the first possible implementation manner of the fourth aspect, in a second possible implementation manner, the notification message further includes service flow information corresponding to the service flow, and the service flow information includes at least one of the following: a source Media Access Control MAC address, a destination MAC address, a source Internet Protocol IP address, a destination IP address, a source port number, a destination port number, and a protocol type.

With reference to the second possible implementation manner of the fourth aspect, in a third possible implementation manner, the service flow category information includes a first service chain table, and the first service chain table is used to indicate the first service chain; and
the generating, according to the notification message, a first forwarding entry corresponding to each programmable switch of i programmable switches includes: generating, according to topology information of a service routing system, the first service chain table, and the service flow information, the first forwarding entry corresponding to each programmable switch of the i programmable switches.

With reference to the second possible implementation manner of the fourth aspect, in a fourth possible implementation manner, the service flow category information includes a first application category identifier, and the first application category identifier is used to indicate an application category of the service flow; and
the generating, according to the notification message, a first forwarding entry corresponding to each programmable switch of i programmable switches includes: determining, according to the first application category identifier and a correspondence between at least one application category identifier and at least one service chain table, a first service chain table corresponding to the first application category identifier, where the first service chain table is used to indicate the first service chain; and generating, according to topology information of a service routing system, the first service chain table, and the service flow information, the first forwarding entry corresponding to each programmable switch of the i programmable switches.

With reference to the first possible implementation manner of the fourth aspect, in a fifth possible implementation manner, the service flow category information includes a first application category identifier; and
the generating, according to the notification message, a first forwarding entry corresponding to each programmable switch of i programmable switches includes: determining, according to the first application category identifier and a correspondence between at least one application category identifier and at least one service chain table, a first service chain table corresponding to the first application category identifier, where the first service chain table is used to indicate the first service chain; and generating, according to topology information of the service routing system, the first service chain table, and the first application category identifier, the first forwarding entry corresponding to each programmable switch of the i programmable switches, where the first forwarding entry includes the first application category identifier.

With reference to the fourth possible implementation manner or the fifth possible implementation manner of the fourth aspect, in a sixth possible implementation manner, the method further includes: receiving service routing rule information before the first forwarding entry corresponding to each programmable switch of the i programmable switches is generated, where the service routing rule information includes the at least one application category identifier, the at least one service chain table, and the correspondence.

With reference to the fourth possible implementation manner or the fifth possible implementation manner of the fourth aspect, in a seventh possible implementation manner, the method further includes: receiving service routing rule information before the first forwarding entry corresponding to each programmable switch of the i programmable switches is generated, where the service routing rule information is used to instruct to perform adjustment processing on the correspondence, and the adjustment processing includes at least one of the following: adding, deleting, and modifying; and performing adjustment processing on the correspondence according to the service routing rule information.

With reference to the sixth possible implementation manner or the seventh possible implementation manner of the fourth aspect, in an eighth possible implementation manner, the receiving service routing rule information includes: receiving the service routing rule information from the first service flow classifier; or receiving the service routing rule information from a policy and charging rules function PCRF device.

With reference to any implementation manner of the first possible implementation manner to the eighth possible implementation manner of the fourth aspect, in a ninth possible implementation manner, the method further includes: receiving information about the data packet of the service flow from the j^{th} programmable switch of the h programmable switches, where j is a positive integer less than or equal to h; whenit is determined that the data packet of the service flow needs to be forwarded to the first service flow classifier, generating a second forwarding entry according to the information about the data packet of the service flow, where the second forwarding entry is used to instruct to forward the data packet of the service flow to the first service flow classifier; and sending the second forwarding entry to the j^{th} programmable switch, so that the j^{th} programmable switch forwards the data packet of the service flow to the first service flow classifier according to the second forwarding entry, and the first service flow classifier generates the notification message according to the data packet of the service flow.

With reference to the ninth possible implementation manner of the fourth aspect, in a tenth possible implementation manner, a forwarding entry corresponding to the data packet of the service flow does not exist on the programmable switch; or a forwarding entry corresponding to the data packet of the service flow on the programmable switch instructs the programmable switch to send information about the data packet of the service flow to the service path controller.

According to a fifth aspect, a service routing method is provided, including: generating a notification message according to a service flow, where the notification message includes service flow category information corresponding to the service flow, the service flow category information is used to indicate a first service chain corresponding to the service flow, and the first service chain includes one or more service enablers that are arranged according to a first sequence; and sending the notification message to a service path controller.

With reference to the fifth aspect, in a first possible implementation manner, the first service chain includes k service enablers of m service enablers, the k service enablers in the first service chain are arranged according to the first sequence, m is a positive integer, and k is a positive integer less than or equal to m.

With reference to the fifth aspect or the first possible implementation manner of the fifth aspect, in a second possible implementation manner, the notification message further includes service flow information corresponding to the service flow, and the service flow information includes at least one of the following: a source Media Access Control MAC address, a destination MAC address, a source Internet Protocol IP address, a destination IP address, a source port number, a destination port number, and a protocol type; and the service flow category information includes a first service chain table, where the first service chain table is used to indicate the first service chain; or the service flow category information includes a first application category identifier, where the first application category identifier is used to indicate an application category of the service flow.

With reference to the fifth aspect or the first possible implementation manner of the fifth aspect, in a third possible implementation manner, the service flow category information includes a first application category identifier, and the first application category identifier is used to indicate an application category of the service flow; and
the method further includes: encapsulating a data packet of the service flow according to the first application category identifier.

With reference to the fifth aspect or the first possible implementation manner of the fifth aspect or the second possible implementation manner of the fifth aspect or the third possible implementation manner of the fifth aspect, in a fourth possible implementation manner, the method further includes: receiving the data packet of the service flow from the j^{th} programmable switch of h programmable switches, where n is a positive integer; and
the generating a notification message according to a service flow includes: generating the notification message according to the data packet of the service flow.

In the embodiments of the present invention, a first service flow classifier generates a notification message that includes service flow category information, where the service flow category information is used to indicate a first service chain that includes k service enablers and is corresponding to a service flow; a service path controller generates, according to the notification message, a first forwarding entry corresponding to each of i programmable switches that are connected to the k service enablers; the i programmable switches each forward a data packet of the service flow according to their respective corresponding first forwarding entries, so that the k service enablers process the data packet of the service flow according to a first sequence. In this way, network reliability can be improved and a network delay can be reduced.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a service routing system according to an embodiment of the present invention;
FIG. 2 is a schematic diagram of a network architecture according to an embodiment of the present invention;
FIG. 3 is a schematic diagram of a network architecture according to another embodiment of the present invention;
FIG. 4 is a schematic diagram of a network architecture according to another embodiment of the present invention;
FIG. 5 is a schematic diagram of a network architecture according to another embodiment of the present invention;
FIG. 6 is a schematic diagram of a service routing system according to another embodiment of the present invention;
FIG. 7 is a schematic diagram of a network architecture according to another embodiment of the present invention;
FIG. 8 is a schematic diagram of a network architecture according to another embodiment of the present invention;
FIG. 9 is a schematic diagram of a network architecture according to another embodiment of the present invention;
FIG. 10 is a schematic block diagram of a service path controller according to an embodiment of the present invention;
FIG. 11 is a schematic block diagram of a service flow classifier according to an embodiment of the present invention;
FIG. 12 is a schematic flowchart of a service routing method according to an embodiment of the present invention;
FIG. 13 is a schematic flowchart of a service routing method according to an embodiment of the present invention;
FIG. 14A and FIG. 14B is a schematic flowchart of a process of a service routing method according to an embodiment of the present invention;
FIG. 15A and FIG. 15B is a schematic flowchart of a process of a service routing method according to another embodiment of the present invention;
FIG. 16A and FIG. 16B is a schematic flowchart of a process of a service routing method according to another embodiment of the present invention;
FIG. 17 is a schematic block diagram of a service path controller according to another embodiment of the present invention; and
FIG. 18 is a schematic block diagram of a service flow classifier according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as a Global System for Mobile Communications (Global System of Mobile communication, GSM), a Code Division Multiple Access (Code Division Multiple Access, CDMA) system, a Wideband Code Division Multiple Access (Wideband Code Division Multiple Access Wireless, WCDMA), a general packet radio service (General Packet Radio Service, GPRS), and Long Term Evolution (Long Term Evolution, LTE).

A service routing system may include a first service flow classifier (Service Traffic Classsifier, STC), a service path controller (Service Path Controller, SPC), h programmable switches, and m service enablers.

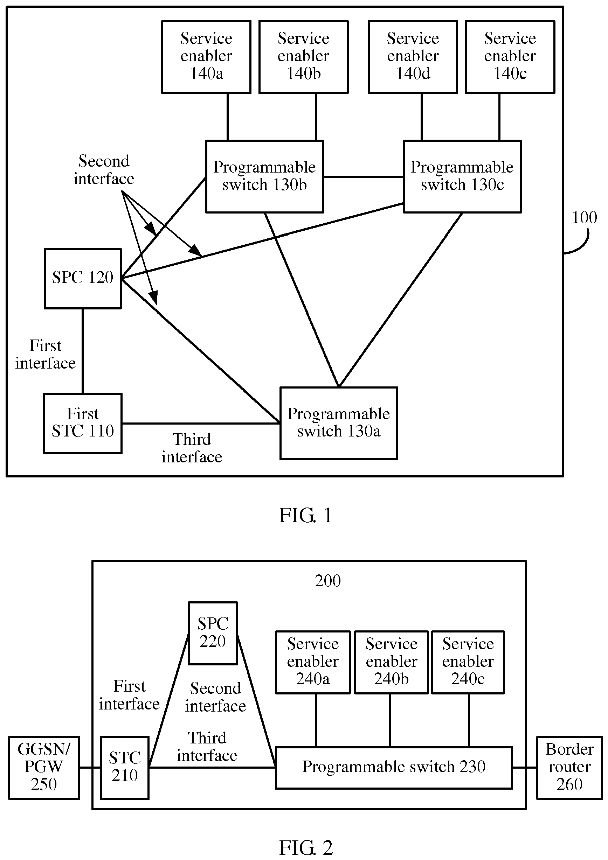

FIG. 1 is a schematic block diagram of a service routing system according to an embodiment of the present invention. For ease of description, FIG. 1 shows three programmable switches and four service enablers. However, in this embodiment of the present invention, there may be more programmable switches and service enablers or may be less programmable switches and service enablers.

The system 100 shown in FIG. 1 includes a first STC 110, an SPC 120, a programmable switch 130a, a programmable switch 130b, a programmable switch 130c, a service enabler 140a, a service enabler 140b, a service enabler 140c, and a service enabler 140d.

There is a first interface between the first STC 110 and the SPC 120, there is a second interface between the SPC 120 and each of the programmable switches 130a to 130c, there is a third interface between the first STC 110 and the j^{th} programmable switch of the programmable switches 130a to 130c, the service enablers 140a to 140d each are connected to one of the programmable switches 130a to 130c, and the programmable switches 130a, 130b, and 130c are interconnected, where i, j, and k are positive integers, both i and j are less than or equal to a quantity of the programmable switches in the system 100, and k is less than or equal to a quantity of the service enablers in the system 100.

In FIG. 1, an example in which there is the third interface between the first STC 110 and the programmable switch 130a, the service enablers 140a and 140b are connected to the programmable switch 130b, and the service enablers 140c and 140d are connected to the programmable switch 130c is used for description.

The first STC 110 generates a notification message according to a service flow, where the notification message includes service flow category information corresponding to the service flow, the service flow category information is used to indicate a first service chain (Service Chain) corresponding to the service flow, the first service chain includes k service enablers of m service enablers, and the k service enablers in the first service chain are arranged according to a first sequence. The SPC 120 receives the notification message from the first STC 110 by using the first interface, and generates, according to the notification message, a first forwarding entry corresponding to each programmable switch of i programmable switches, where the i programmable switches are connected to at least one of the k service enablers, and the i programmable switches are selected from the programmable switches 130a to 130c. Each programmable switch of the i programmable switches receives the first forwarding entry corresponding to each programmable switch from the SPC 120 by using the second interface, and forwards a data packet of the service flow according to the first forwarding entry corresponding to each programmable switch, so that the k service enablers process the data packet of the service flow according to the first sequence.

In this embodiment of the present invention, the first interface between the first STC 110 and the SPC 120 may be referred to as an Sts interface.

The programmable switch 130a, 130b, or 130c may be referred to as a switch whose forwarding entry can be programmatically controlled by an external controller by using an external open interface. For example, the programmable switch 130a, 130b, or 130c may be an OpenFlow (OpenFlow) switch, and the SPC 120 may interact with the programmable switch based on the OpenFlow protocol. The programmable switches 130a, 130b, and 130c may be interconnected. For example, the programmable switches 130a, 130b, and 130c may be directly interconnected, or may be interconnected by using a common-switch network. In FIG. 1, an example in which the programmable switches 130a to 130c are interconnected by using a common-switch network is used for description.

Each service enabler may be referred to as a network element that can provide a value-added service. For example, each service enabler may be a video optimizer, a firewall, a service flow compressor, a web (Web) cache, a deep packet inspector, or an HTTP header enhancer.

The foregoing service flow may be an uplink service flow, or may refer to a downlink service flow, which is not limited in this embodiment of the present invention.

The first STC 110 may parse the service flow and determine the service flow category information. The service flow category information is used to indicate the first service chain corresponding to the service flow, and therefore, to enable the service flow to pass through the service enablers in the first service chain according to the first sequence, the SPC 120 may determine, according to the notification message, the i programmable switches through which the service flow needs to pass, and generate the first forwarding entry corresponding to each programmable switch of the i programmable switches. The first forwarding entry corresponding to each programmable switch defines a specific forwarding rule of the service flow on the programmable switch. For example, if the programmable switch is an OpenFlow switch, the first forwarding entry may be a flow entry on the OpenFlow switch. It should be understood that in this embodiment of the present invention, the foregoing first forwarding entry may include multiple specific forwarding entries.

The SPC 120 may send the first forwarding entry corresponding to each of the i programmable switches to each of the i programmable switches by using the second interface. Each programmable switch of the i programmable switches may forward the data packet of the service flow according to the first forwarding entry corresponding to each programmable switch, so that the k service enablers process the data packet of the service flow according to the first sequence.

For example, it is assumed that the first service chain includes the service enablers 140a and 140c, and the service enabler 140a is arranged before the service enabler 140c, and in this case, to enable the service flow to pass through the first service chain, the service flow needs to pass through the programmable switches 130b and 130c. The SPC 120 may determine a first forwarding entry corresponding to the programmable switch 130b and a first forwarding entry corresponding to the programmable switch 130c, and send their respective corresponding first forwarding entries to the two programmable switches. The programmable switch 130a may forward the data packet of the service flow according to a first forwarding entry corresponding to the programmable switch 130a, so that the data packet arrives at the service enabler 140a. The programmable switch 130a may forward the data packet to the programmable switch 130b, and the programmable switch 130b forwards the data packet to the service enabler 140a according to the first forwarding entry corresponding to the programmable switch 130b. The service enabler 140a processes the data packet and then returns a processed data packet to the programmable switch 130b. Then the programmable switch 130b forwards the data packet processed by the service enabler 140a, so that the data packet processed by the service enabler 140a arrives at the service enabler 140c. That is, the programmable switch 130b may forward the data packet processed by the service enabler 140a to the programmable switch 130c, the programmable switch 130c forwards the data packet processed by the service enabler 140a to the service enabler 140c, and the service enabler 140c processes the data packet and then returns a processed data packet to the programmable switch 130c. The programmable switch 130c may continue to forward the data packet returned by the service enabler 140c. For example, as described above, if the service flow is an uplink service flow, the programmable switch 130c may forward, to a border router, the data packet returned by the service enabler 140c; if the service flow is a downlink service flow, the programmable switch 130c may forward, to a mobile gateway, the data packet returned by the service enabler 140c.

It can be learned from the foregoing that in this embodiment of the present invention, a first service flow classifier generates a notification message that includes service flow category information, where the service flow category information is used to indicate a first service chain that includes k service enablers and is corresponding to a service flow; a service path controller generates, according to the notification message, a first forwarding entry corresponding to each of i programmable switches that are connected to the k service enablers; the i programmable switches each forward the service flow according to their respective corresponding first forwarding entries, so that the k service enablers in the first service chain process a data packet of the service flow according to a first sequence. It can be seen that in this embodiment of the present invention, service enablers are connected to programmable switches, which is different from the prior art in which service enablers are connected in series in a service flow path, so that a corresponding service enabler can be selected according to a service flow. In this way, network reliability can be improved, a network relay can be reduced, and costs of an operator can be decreased. In addition, in this embodiment of the present invention, functions of a first service flow classifier and a service path controller are separated, which simplifies a network configuration process. Therefore, in this embodiment of the present invention, forwarding performance and deployment flexibility of a service routing system can be improved.

In this embodiment of the present invention, a first service flow classifier generates a notification message that includes service flow category information, where the service flow category information is used to indicate a first service chain that includes k service enablers and is corresponding to a service flow; a service path controller generates, according to the notification message, a first forwarding entry corresponding to each of i programmable switches that are connected to the k service enablers; the i programmable switches each forward a data packet of the service flow according to their respective corresponding first forwarding entries, so that the k service enablers process the data packet of the service flow according to a first sequence. In this way, network reliability can be improved and a network delay can be reduced.

Optionally, in another embodiment, the notification message may further include service flow information corresponding to the service flow, and the service flow information includes at least one of the following: a source Media Access Control (Media Access Control, MAC) address, a destination MAC address, a source Internet Protocol (Internet Protocol, IP) address, a destination IP address, a source port number, a destination port number, and a protocol type.

For example, if the SPC 120 requires the programmable switch to match only the destination IP address and perform wildcard matching on the foregoing other elements, the service flow information may include only the destination IP.

Alternatively, the service flow information may include a mask and a combination of the foregoing multiple elements. An operation is performed on the foregoing multiple elements by using the mask, so that an element that needs to be matched keeps unchanged, and other elements change into 0 or 1. For example, the service flow information may include the destination IP, the source MAC address, the destination MAC address, and the mask. The SPC 120 may use the mask to perform an "OR" operation or an "AND" operation on the destination IP, the source MAC address, and the destination MAC address, so that the destination IP address keeps unchanged, and both the source MAC address and the destination MAC address change into 0 or 1.

Whenthe notification message includes the service flow information, the SPC 120 may generate, according to the service flow information and the service flow category information, the first forwarding entry corresponding to each of the i programmable switches.

Optionally, in an embodiment, the service flow category information may include a first service chain table, where the first service chain table is used to indicate the first service chain. The SPC 120 may generate, according to topology information of the system 100, the first service chain table, and the service flow information, the first forwarding entry corresponding to each programmable switch of the i programmable switches. The foregoing topology information of the system 100 may be used to indicate an internal topology structure of the system 100 and an external connection relationship of the system 100.

The first service chain table may include identifiers of the k service enablers. The identifier of the service enabler may be a character string that includes an Internet Protocol (Internet Protocol, IP) address, a Media Access Control (Media Access Control, MAC) address, or other symbols of the service enabler.

In the first service chain table, the identifiers of the k service enablers may be arranged according to the foregoing first sequence.

The topology information of the system 100 may include an internal topology and an external topology of the system 100. For example, the internal topology may include a topology among the first STC 110, the SPC 120, the h programmable switches, and the m service enablers. The external topology may include a topology between the system 100 and the mobile gateway and a topology between the system 100 and the border router.

For example, the SPC 120 may directly generate the first forwarding entry according to the topology information of the system 100, at least one of IP 7-tuple included in the service flow information, and the first service chain table. Alternately, the SPC 120 may determine a first service routing template according to the first service chain table and the topology information of the system 100, where the first service routing template is corresponding to the first service chain; and then may write at least one of IP 7-tuple included in the service flow information into the first service routing template, so as to generate the first forwarding entry.

The first service routing template may be uniformly described for a forwarding rule of the foregoing first service chain. Specifically, a common part of forwarding rules of multiple data packets that need to be processed by the k service enablers may be used as the first service routing template. In this way, for data packets that are of the service flow and that need to be processed by the k service enablers, IP information of the data packets is written into the first service routing template, so that a specific forwarding rule of each data packet of the service flow, that is, the foregoing first forwarding entry, can be obtained.

The SPC 120 may store a correspondence between the first service routing template and the first service chain table. In this way, if the SPC 120 receives the first service chain table again, the SPC 120 may find the first service routing template by using the first service chain table, and write IP information of the service flow into the first service routing template, so that their respective corresponding forwarding entries of the i programmable switches can be obtained, which can improve efficiency of determining a forwarding entry.

The foregoing topology information of the system 100 may be pre-stored inside the SPC 120.

Optionally, in another embodiment, the service flow category information may include a first application category identifier, where the first application category identifier is used to indicate an application category of the service flow. The SPC 120 may determine, according to the first application category identifier and a correspondence between at least one application category identifier and at least one service chain table, a first service chain table corresponding to the first application category identifier, where the first service chain table is used to indicate the first service chain; and generate, according to topology information of the system 100, the first service chain table, and the service flow information, the first forwarding entry corresponding to each programmable switch of the i programmable switches. The foregoing topology information of the system 100 may be used to indicate an internal topology structure of the system 100 and an external connection relationship of the system 100.

For example, the application category of the service flow may include a category such as a video application, a peer-to-peer (Peer to Peer, P2P) application, the File Transfer Protocol (File Transfer Protocol, FTP), or Web browsing. Service flows of different application categories may be processed by service enablers in different service chains, or may be processed by service enablers in a same service chain. That is, a service chain that includes a service enabler may be corresponding to one application category, or may be corresponding to multiple application categories. Therefore, in the foregoing correspondence between the at least one application category identifier and the at least one service chain table, one service chain table may be corresponding to one application category identifier, or may be corresponding to multiple application category identifiers. Each service chain table may be used to indicate a service chain that includes at least one service enabler of the m service enablers.

Therefore, once the first STC 110 determines the first application category identifier, the first service chain corresponding to the service flow is determined.

The foregoing first application category identifier (Application Identity, App ID) may be any identifier that can be used to distinguish categories. For example, the first application category identifier may be a differentiated services code point (Differentiated Services Code Point, DSCP) field or a Flow Label field in an IP packet header field, may be a virtual local area network (Virtual Local Area Network, VLAN) label, may be a Multiprotocol Label Switching (Multi-Protocol Label Switching, MPLS) label, may be a tunnel ID in various tunnel encapsulation protocols, or may be a customized identifier that is used to distinguish application categories.

After receiving the first application category identifier, the SPC 120 may use the first application category identifier as an index, find the first service chain table from the foregoing correspondence between the at least one application category identifier and the at least one service chain table, and then generate, according to the topology information of the system 100, the first service chain table, and the service flow information, the first forwarding entry corresponding to each programmable switch of the i programmable switches.

Optionally, in an embodiment, the SPC 120 may further generate at least one service routing template according to the topology information of the system 100 and the at least one service chain table in the foregoing correspondence, and store the at least one service routing template, where the at least one service routing template and the at least one service chain table may be in a one-to-one correspondence. In this way, after receiving the first application category identifier, the SPC 120 finds the first service chain table according to the first application category identifier, so that a first service routing template corresponding to the first service chain table can be determined. IP information included in the service flow information may be directly written into the first service routing template, to obtain the first forwarding entry corresponding to each programmable switch of the i programmable switches, which can improve efficiency of determining a first forwarding entry.

The foregoing correspondence between the at least one application category identifier and the at least one service chain table may be pre-stored inside the SPC 120; or before a UE interacts with a server, the SPC 120 may receive the correspondence between the at least one application category identifier and the at least one service chain table from another node, and store the correspondence.

Optionally, in another embodiment, the service flow category information includes a first application category identifier, where the first application category identifier is used to indicate an application category of the service flow.

The SPC 120 may determine, according to the first application category identifier and a correspondence between at least one application category identifier and at least one service chain table, a first service chain table corresponding to the first application category identifier, where the first service chain table is used to indicate the first service chain. The SPC 120 may generate, according to topology information of the system 100, the first service chain table, and the first application category identifier, the first forwarding entry corresponding to each programmable switch of the i programmable switches, where the first forwarding entry includes the first application category identifier.

The first forwarding entry includes an application category identifier, so that the programmable switch can forward a service flow packet according to the application category identifier, and therefore, a quantity of first forwarding entries stored on the programmable switch can be reduced.

Optionally, in another embodiment, the first STC 110 may further encapsulate the data packet of the service flow according to the first application category identifier.

The first forwarding entry includes an application category identifier, so that the programmable switch can forward a service flow packet according to the application category identifier. In this case, the first STC 110 needs to encapsulate the data packet of the service flow according to the first application category identifier before forwarding the data packet externally, and then sends an encapsulated data packet. For example, according to the first application category identifier, a DSCP field of the data packet of the service flow may be modified, or a VLAN label may be added to the service flow, or an MPLS label may be added to the service flow packet, or tunnel encapsulation, such as virtual extensible local area network (Virtual eXtensible Local Aera Network, VXLAN) encapsulation or generic routing encapsulation (Generic Routing Encapsulation, GRE), may be performed on the service flow packet by directly using the first application category identifier as a tunnel identifier.

Optionally, in another embodiment, the SPC 120 may receive service routing rule information before generating the first forwarding entry corresponding to each programmable switch of the i programmable switches, where the service routing rule information may include the at least one application category identifier, the at least one service chain table, and the correspondence between the at least one service chain table and the at least one application category identifier. In this way, the SPC 120 may store the foregoing at least one application category identifier, the foregoing at least one service chain table, and the foregoing correspondence between the at least one service chain table and the at least one application category identifier.

Optionally, in another embodiment, the SPC 120 may receive service routing rule information before generating the first forwarding entry corresponding to each programmable switch of the i programmable switches, where the service routing rule information is used to instruct to perform adjustment processing on the correspondence between the at least one application category identifier and the at least one service chain table, and the adjustment processing includes at least one of the following: adding, deleting, and modifying. The SPC 120 may perform adjustment processing on the correspondence according to the service routing rule information.

The SPC 120 may adjust the correspondence between the at least one application category identifier and the at least one service chain table according to the service routing rule information, where the correspondence is stored by the SPC 120. For example, a new item may be added, one or some items in the correspondence may be deleted, or the correspondence between the application category and the service chain table may be modified.

For example, a new information element may be added to the service routing rule information to indicate various adjustment operations. Descriptions are made in the following with reference to specific examples.

### (1) Adding operation

Only a new service chain may be added to the correspondence. For example, an information element in the service routing rule information may include (Operation="Add", Service chain ID="111", Service chain="Enablerl, Enabler2"). "Operation" may represent an operation field, for example, the foregoing "Add" may represent an adding operation; "Service chain ID" may represent a service chain ID field, for example, the foregoing service chain ID is 111; and "Service chain" may represent a service enabler included in a service chain, for example, the service chain may include a service enabler 1 and a service enabler 2.

In this case, the newly-added service chain has no corresponding App ID. The corresponding App ID may be then added for the service chain in a subsequent process.

A corresponding App ID may be added to an existing service chain in the correspondence. For example, an information element in the service routing rule information may include (Operation="Add", Service chain ID="111", App ID="Video1"). "App ID" may represent an application category ID, for example, the App ID is a "Video (video) 1" category herein.

A new service chain and a corresponding App ID may be added to the correspondence, where there may be multiple App IDs. For example, an information element in the service routing rule information may include (Operation="Add", Service chain ID="111", Service chain="Enablerl, Enabler2", App ID="Videol, Video2, Web").

### (2) Deleting operation

A service chain that is specified by a service chain ID and an App ID that is corresponding to the service chain may be deleted from the correspondence. For example, an information element in the service routing rule information may include (Operation="Delete", Service chain ID="111"), or (Operation="Delete", Service chain= "Enabler1, Enabler2"). The SPC 120 may simultaneously delete all forwarding entries associated with the service chain from the programmable switch 130.

Alternatively, only an App ID that is corresponding to a service chain ID may be deleted. For example, an information element in the service routing rule information may include (Operation="Delete", Service chain ID="111", App ID="Videol"). The SPC 120 may simultaneously delete forwarding entries corresponding to the App ID from the programmable switches.

### (3) Modifying operation

A service chain specified by a service chain ID may be modified, and the SPC 120 may recalculate a forwarding entry according to content of a new service chain. For example, an information element in the service routing rule information may include (Operation="Modify", Service chain ID="111", Service chain="Enablerl, Enabler2"). Alternatively, this operation may be replaced by an operation of performing deleting first and then performing adding.

In addition to being distinguished according to operation (operation) fields in the service routing rule information, the foregoing adding operation, deleting operation, and modifying operation may also be replaced by independent message names. For example, an adding message is Add Service Routing Rule (), a deleting message is Delete Service Routing Rule (), and a modifying message is Modify Service Routing Rule (). Optionally, in another embodiment, the first STC 110 may further acquire the foregoing service routing rule information, and the SPC 120 may receive the service routing rule information from the first service flow classifier by using the first interface.

Optionally, in another embodiment, the first STC 110 may receive the service routing rule information from a PCRF device.

Optionally, in another embodiment, the SPC 120 may receive the foregoing service routing rule information from a policy and charging rules function (Policy and Charging Rules Function, PCRF) device.

For example, a service routing information element may be added to an existing Gx interface message, and the SPC 120 may receive, from the PCRF device, the Gx interface message that carries the service routing rule information, or the PCRF device may separately transfer the service routing rule information by using a new interface message.

Optionally, in another embodiment, the j^{th} programmable switch, that is, the programmable switch 130a shown in FIG. 1, may send the first n data packets of the service flow to the first STC 110 by using the third interface before the first STC 110 generates the notification message according to the service flow, where n is a positive integer. The first STC 110 may generate the notification message according to the first n data packets of the service flow.

The first STC 110 may parse the first n data packets according to a process in the prior art, so as to determine the service flow category information, and determine the service flow information when it is required. For example, the first STC 110 may perform deep packet inspection (Deep Packet Inspection, DPI) processing on L7 layers of the first n data packets, to determine the service flow information and the service flow category information; or the first STC 110 may perform matching on L3/4 layers of the first n data packets, to determine the service flow information and the service flow category information.

For example, the first STC 110 may perform DPI processing on messages at L7 layers of the n data packets or may directly match the n data packets according to a preset L3/4 layer rule, so as to obtain the service flow category information. In a simplified embodiment, n may be 1, that is, the first STC 110 may identify the first data packet to determine the service flow category information. In some cases, if the first STC 110 cannot determine the service flow category information according to only the first data packet, the first STC 110 needs to continuously buffer two or more data packets to determine the service flow category information.

Optionally, in another embodiment, the j^{th} programmable switch, that is, the programmable switch 130a shown in FIG. 1, may receive the first data packet of the service flow before sending, by using the third interface, the first n data packets to the first STC 110. The SPC 120 may further receive information about the first data packet from the programmable switch 130, and whenit is determined that the first data packet needs to be forwarded to the first STC 110, generate a second forwarding entry according to the information about the first data packet, where a destination address corresponding to the service flow in the second forwarding entry is an address of the first STC 110. The j^{th} programmable switch, that is, the programmable switch 130a shown in FIG. 1, may further receive the second forwarding entry from the SPC 120 by using the second interface, and forward the first n data packets to the first STC 110 according to the second forwarding entry by using the third interface.

For example, if the service flow is a downlink service flow, the border router may directly send the data packet of the service flow to the programmable switch 130a. If the first data packet is received and the programmable switch 130a does not have a forwarding information table corresponding to this data packet, the programmable switch 130a may send the information about the first data packet to the SPC 120. The information about the first data packet may include the entire first data packet, or may include partial information about the first data packet, for example, information about the first 128 bytes. For example, the information about the first data packet may be sent to the SPC 120 by using a Packet_in message. Whenit is determined that the first data packet needs to be forwarded to the first STC 110, the SPC 120 may generate the second forwarding entry according to the information about the first data packet and preset service routing. The second forwarding entry may instruct the programmable switch 130a to forward the data packet to the first STC 110.

It can be seen that in this embodiment, the SPC 120 may decide whether to forward the data packet to the first STC 110 for processing. For example, for a service flow on which DPI identification needs to be performed by using an L7 layer, the SPC 120 may determine to forward the foregoing first data packet to the first STC 110 for identification. However, for a service flow that can be directly matched by using an L3/4 layer, the SPC 120 may directly generate a forwarding entry and deliver the forwarding entry to the programmable switch 130a, and the programmable switch 130a forwards the data packet of the service flow according to the forwarding entry. In this way, the SPC 120 can control traffic that passes through the first STC 110.

Before receiving a new forwarding entry corresponding to the service flow, the programmable switch 130a forwards the received data packet of the service flow to the first STC 110 according to the second forwarding entry by using the third interface. For example, if the programmable switch receives the first n data packets of the service flow before receiving the new forwarding entry corresponding to the service flow, the programmable switch forwards the first n data packets to the STC 110.

Optionally, in another embodiment, there may be a fourth interface between the j^{th} programmable switch, that is, the programmable switch 130a shown in FIG. 1, and the mobile gateway. The j^{th} programmable switch may receive the first data packet from the mobile gateway by using the fourth interface.

The mobile gateway may be a gateway general packet radio service support node (Gateway GPRS (General Packet Radio Service) Support Node, GGSN), a packet data network gateway (Packet Data Network Gateway, PGW), or the like.

In an implementation manner, the mobile gateway and the first STC 110 may be both connected to the programmable switch 130a, and the mobile gateway may be connected to a UE by using a radio access network. In this way, for a data packet of an uplink service flow, the data packet of the service flow may be directly sent by the mobile gateway to the programmable switch 130a without being forwarded by the first STC 110, so that a network delay can be reduced.

Optionally, in another embodiment, the first STC 110 may be located between the mobile gateway and the j^{th} programmable switch, or the first STC 110 may be located inside the mobile gateway.

The system 100 may be deployed in multiple manners. For example, the first STC 110 may be deployed between the mobile gateway and the programmable switch 130 as an independent device; or the first STC 110 may be deployed inside the mobile gateway as a module.

In addition, the SPC 120 may also be built in the first STC 110, that is, the first interface may be an internal interface.

Optionally, in another embodiment, the system 100 may further include a second service flow classifier, and there may be the first interface between the second service flow classifier and the SPC 120. There may be the third interface between the second service flow classifier and the p^{th} programmable switch of the programmable switches 130a to 130c, where p is a positive integer less than or equal to h.

Specifically, the system 100 may include multiple service flow classifiers, there is the first interface between each of the multiple service flow classifiers and the SPC 120, and there is the third interface between each of the multiple service flow classifiers and one of the programmable switches 130a to 130c. A process of processing a service flow by each service flow classifier is similar to a processing process of the foregoing first STC 120, and details are not described herein.

In this embodiment, the SPC 120 may serve the multiple service flow classifiers, so that service flows of a same category from different sources can pass through a same service enabler. In this case, service chain tables or application category identifiers configured on all service flow classifiers may be consistent.

This embodiment of the present invention is described in detail in the following with reference to specific examples. It should be noted that, examples shown in FIG. 2 to FIG. 9 are merely intended to help a person skilled in the art better understand this embodiment of the present invention, instead of limiting the scope of this embodiment of the present invention. It should further be noted that for ease of description, in FIG. 2 to FIG. 9, one programmable switch and three service enablers are used as an example for description. However, in this embodiment of the present invention, there may be more programmable switches; and there may be more service enablers or less service enablers.

FIG. 2 is a schematic diagram of a network architecture according to an embodiment of the present invention.

In the network architecture shown in FIG. 2, a service routing system 200 may include an STC 210, an SPC 220, a programmable switch 230, a service enabler 240a, a service enabler 240b, and a service enabler 240c. There may be a first interface between the STC 210 and the SPC 220, there may be a second interface between the SPC 220 and the programmable switch 230, and there may be a third interface between the STC 210 and the programmable switch 230. The service enablers 240a to 240c each are connected to the programmable switch 230. The STC 210 may be connected to a GGSN/PGW 250, and the programmable switch 230 may be connected to a border router (Router) 260.

In the system 200 shown in FIG. 2, the STC 210 may be deployed between the GGSN/PGW 250 and the programmable switch 230 as an independent device. The GGSN/PGW 250 may communicate with the STC 210 by using a Gi interface.

In an uplink direction, the STC 210 may receive a service flow from the GGSN/PGW 250. In a downlink direction, the STC 210 may receive a service flow from the programmable switch 230.

For example, the STC 210 may generate a notification message according to the received service flow, where the notification message includes service flow category information corresponding to the service flow, the service flow category information may be used to indicate a first service chain corresponding to the service flow, the first service chain includes at least one of the foregoing service enablers 240a to 240c, and the service enablers in the first service chain are arranged according to a first sequence.

The SPC 220 may receive the notification message from the STC 210 by using the first interface, and may generate, according to the notification message, a first forwarding entry corresponding to the programmable switch 230.

The programmable switch 230 may receive the first forwarding entry from the SPC 220 by using the second interface, and forward a data packet of the service flow according to the first forwarding entry, so that the service enablers in the first service chain process the data packet of the service flow according to the first sequence.

If the service flow is an uplink service flow, the programmable switch 230 may forward the data packet processed by the first service chain to the border router 260, and the border router 260 forwards the data packet processed by the first service chain to a server. If the service flow is a downlink service flow, the programmable switch may forward the data packet processed by the first service chain to the STC 210, the STC 210 forwards the data packet processed by the first service chain to the GGSN/PGW 250, and the GGSN/PGW 250 forwards the data packet processed by the first service chain to a UE.

For specific functions and operations of the system 200, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

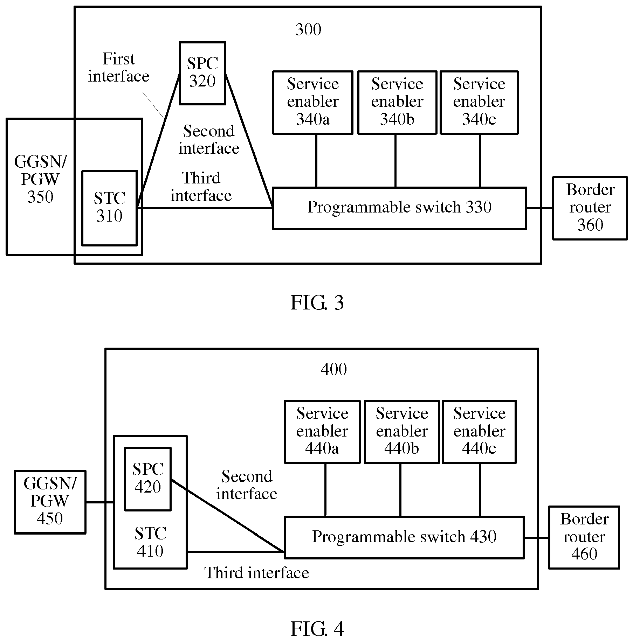

FIG. 3 is a schematic diagram of a network architecture according to another embodiment of the present invention.

In the network architecture shown in FIG. 3, a service routing system 300 may include an STC 310, an SPC 320, a programmable switch 330, a service enabler 340a, a service enabler 340b, and a service enabler 340c. There may be a first interface between the STC 310 and the SPC 320, there may be a second interface between the SPC 320 and the programmable switch 330, and there may be a third interface between the STC 310 and the programmable switch 330. The service enablers 340a to 340c each are connected to the programmable switch 330.

The STC 310 may be deployed inside a GGSN/PGW 350 as a module, and may interact with the GGSN/PGW 350 by using an interface inside the GGSN/PGW 350. The programmable switch 330 may further be connected to a border router 360.

It should be understood that, in FIG. 3, for ease of description, only three service enablers are shown. However, in this embodiment of the present invention, there may be less service enablers or may be more service enablers.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

FIG. 4 is a schematic diagram of a network architecture according to another embodiment of the present invention.

In the network architecture shown in FIG. 4, a service routing system 400 may include an STC 410, an SPC 420, a programmable switch 430, a service enabler 440a, a service enabler 440b, and a service enabler 440c. The SPC 420 may be built in the STC 410 as a module. There may be a first interface (not shown in FIG. 4) between the STC 410 and the SPC 420, and in this case, the first interface is an internal interface of the STC 410. There may be a second interface between the SPC 420 and the programmable switch 430, and there may be a third interface between the STC 410 and the programmable switch 430. The service enablers 440a to 440c each are connected to the programmable switch 430.

The STC 410 may be connected to a GGSN/PGW 450, and the programmable switch 430 may be connected to a border router 460.

For specific functions and operations of the system 400, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

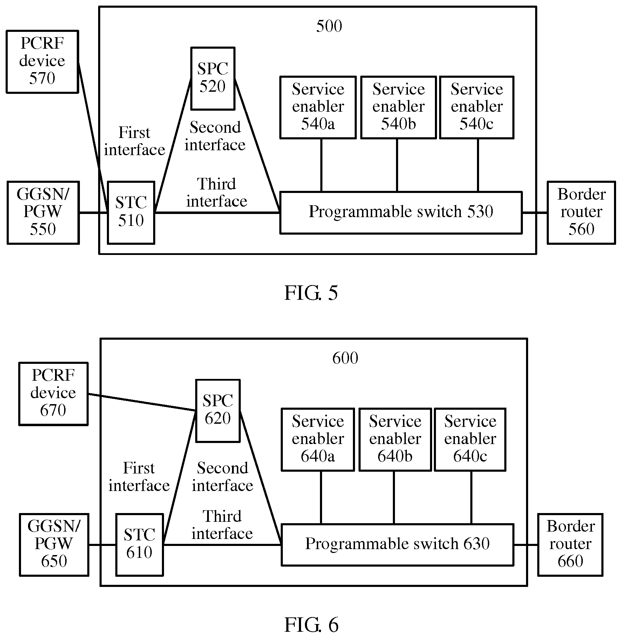

FIG. 5 is a schematic diagram of a network architecture according to another embodiment of the present invention.

In the network architecture shown in FIG. 5, a service routing system 500 may include an STC 510, an SPC 520, a programmable switch 530, a service enabler 540a, a service enabler 540b, and a service enabler 540c.

There may be a first interface between the STC 510 and the SPC 520, there may be a second interface between the SPC 520 and the programmable switch 530, and there may be a third interface between the STC 510 and the programmable switch 530. The service enablers 540a to 540c each are connected to the programmable switch 530.

The STC 510 may be connected to a GGSN/PGW 550, and the programmable switch 530 may be connected to a border router 560. In addition, the STC 510 may further be connected to a PCRF device 570.

The STC 510 may generate a notification message according to a service flow, where the notification message includes service flow information and service flow category information that are corresponding to the service flow, the service flow category information may be used to indicate a first service chain corresponding to the service flow, the first service chain includes at least one of the foregoing service enablers 540a to 540c, and the service enablers in the first service chain are arranged according to a first sequence.

The SPC 520 may receive the notification message from the STC 510 by using the first interface, and may generate, according to the notification message, a first forwarding entry corresponding to the programmable switch 530.

Optionally, the service flow category information may include a first application category identifier, where the first application category identifier is used to indicate an application category of the service flow, and the first application category identifier is corresponding to the first service chain. The SPC 520 may determine a first service chain table according to the first application category identifier and a correspondence between at least one application category identifier and at least one service chain table, where the first service chain table may indicate the first service chain. Then the SPC 520 may generate the first forwarding entry according to the first service chain and topology information of the system 500.

Specifically, before a user equipment interacts with a server, the STC 510 may receive the foregoing service routing rule information from the PCRF device 570, where the service routing rule information may include the correspondence between the at least one service chain table and the at least one application category identifier. The STC 510 may forward the service routing rule information to the SPC 520 by using the first interface.

The programmable switch 530 may receive the first forwarding entry from the SPC 520 by using the second interface, and forward a data packet of the service flow according to the first forwarding entry, so that the service enablers in the first service chain process the data packet of the service flow according to the first sequence.

For specific functions and operations of the system 500, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

FIG. 6 is a schematic diagram of a service routing system according to another embodiment of the present invention.

In a network architecture shown in FIG. 6, a service routing system 600 may include an STC 610, an SPC 620, a programmable switch 630, a service enabler 640a, a service enabler 640b, and a service enabler 640c.

There may be a first interface between the STC 610 and the SPC 620, there may be a second interface between the SPC 620 and the programmable switch 630, and there may be a third interface between the STC 610 and the programmable switch 630. The service enablers 640a to 640c each are connected to the programmable switch 630.

The STC 610 may be connected to a GGSN/PGW 650, and the programmable switch 630 may be connected to a border router 660.

In addition, in FIG. 6, the SPC 620 may further be connected to a PCRF device 670. Being similar to the embodiment shown in FIG. 5, the SPC 620 may determine a first service chain table according to a first application category identifier and a correspondence between at least one application category identifier and at least one service chain table. Then a first forwarding entry corresponding to the programmable switch 630 may be generated according to the first service chain table and topology information of the system 600. In FIG. 5, the SPC 620 may receive service routing rule information that includes the foregoing correspondence from the STC 610; however, in FIG. 6, because the SPC 620 may be connected to the PCRF device 670, the SPC 620 may directly receive the service routing rule information that includes the foregoing correspondence from the PCRF device 670.

For specific functions and operations of the system 600, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

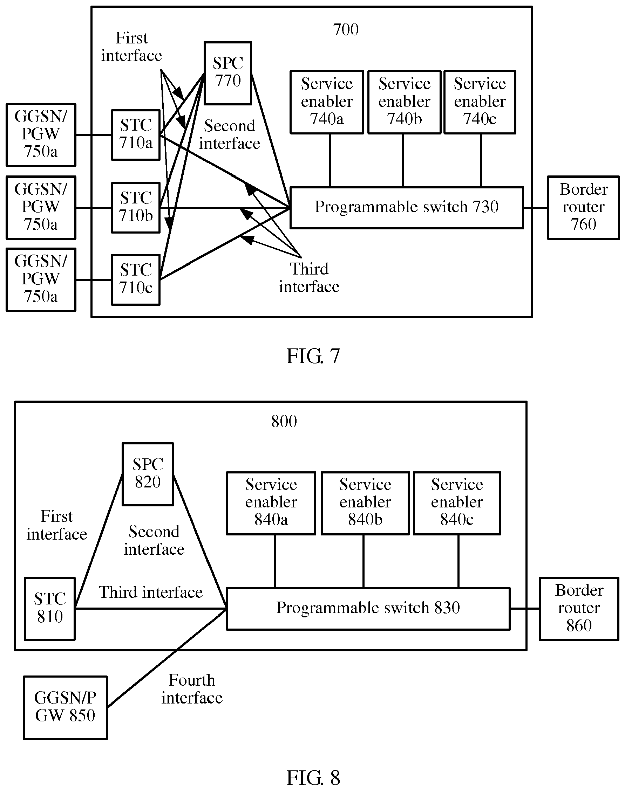

FIG. 7 is a schematic diagram of a network architecture according to another embodiment of the present invention.

A service routing system may include multiple STCs, and the multiple STCs may be all connected to an SPC. That is, the SPC may serve the multiple STCs, so that service flows of a same application category from different sources can pass through a same service chain.

For example, in FIG. 7, a service routing system 700 may include an STC 710a, an STC 710b, an STC 710c, an SPC 720, a programmable switch 730, a service enabler 740a, a service enabler 740b, and a service enabler 740c.

There may be a first interface between each of the STCs 710a to 710c and the SPC 620, there may be a second interface between the SPC 720 and the programmable switch 730, and there may be a third interface between each of the STCs 710a to 710c and the programmable switch 630. The service enablers 640a to 640c each are connected to the programmable switch 630.

The STCs 710a to 710c each may be connected to a GGSN/PGW. As shown in FIG. 7, the STC 710a is connected to a GGSN/PGW 750a, the STC 710b is connected to a GGSN/PGW 750b, the STC 710c is connected to a GGSN/PGW 750c, and the programmable switch 730 may be connected to a border router 760.

In this embodiment of the present invention, alternatively, all the three STCs may be connected to one GGSN/PGW.

It should be understood that, in FIG. 7, for ease of description, only three STCs are shown. However, in this embodiment of the present invention, there may be less STCs or may be more STCs.

For specific functions and operations of the system 700, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

FIG. 8 is a schematic diagram of a network architecture according to another embodiment of the present invention.

In the network architecture shown in FIG. 8, a service routing system 800 may include an STC 810, an SPC 820, a programmable switch 830, a service enabler 840a, a service enabler 840b, and a service enabler 840c.

There may be a first interface between the STC 810 and the SPC 820, there may be a second interface between the SPC 820 and the programmable switch 830, and there may be a third interface between the STC 810 and the programmable switch 830. The service enablers 840a to 840c each are connected to the programmable switch 830.

There may be a fourth interface between the programmable switch 830 and a GGSN/PGW 850, and the programmable switch 830 may further be connected to a border router 860.

In the network architectures shown in FIG. 2 to FIG. 7, after an SPC delivers a first forwarding entry to a programmable switch, a data packet of an uplink service flow is forwarded by a GGSN/PGW to an STC and forwarded by the STC to the programmable switch, and then is forwarded by the programmable switch.

In the network architecture shown in FIG. 8, a data packet of an uplink service flow may be directly sent by the GGSN/PGW 850 to the programmable switch 830. A data packet of a downlink service flow may be forwarded by the border router 860 to the programmable switch 830.

For the first data packet, the programmable switch 830 may have no corresponding forwarding entry, and in this case, the programmable switch 830 may forward information about the first data packet to the SPC 820. Whenit is determined that the first data packet needs to be forwarded to the STC 810, the SPC 820 may send a second forwarding entry to the programmable switch 830, where the second forwarding entry is used to instruct to forward a data packet of a service flow to the STC 810. In this way, the programmable switch 830 may send the first data packet to the STC 810 according to the second forwarding entry. Before receiving a new forwarding entry corresponding to the service flow, if the programmable switch receives the first n data packets of the service flow, the programmable switch forwards the first n data packets to the STC 810. The STC 810 may determine, according to the first n data packets, service flow information and service flow category information that are corresponding to the service flow.

In FIG. 8, the SPC 820 may decide whether to forward the data packet to the STC 810 for processing, so that traffic that passes through the STC 810 can be controlled.

For specific functions and operations of the system 800, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

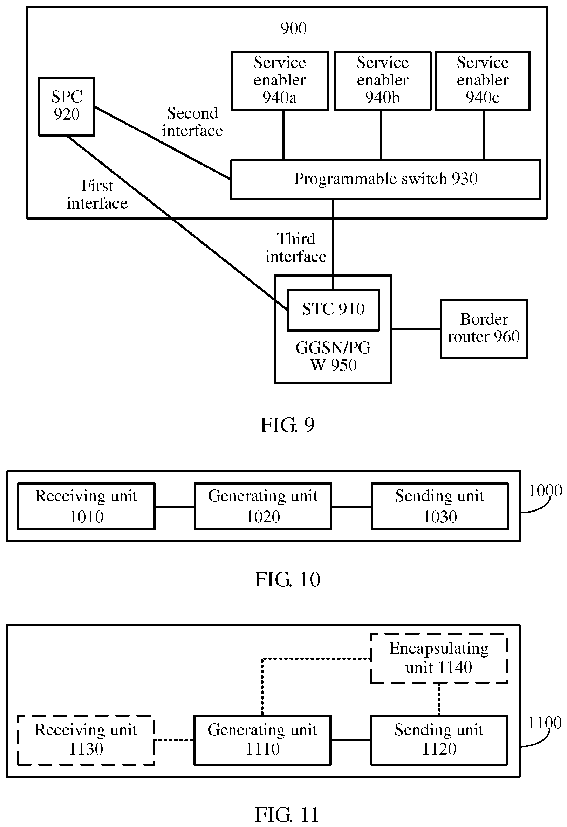

FIG. 9 is a schematic diagram of a network architecture according to another embodiment of the present invention.

In the network architecture shown in FIG. 9, a service routing system 900 may include an STC 910, an SPC 920, a programmable switch 930, a service enabler 940a, a service enabler 940b, and a service enabler 940c. There may be a first interface between the STC 910 and the SPC 920, there may be a second interface between the SPC 920 and the programmable switch 930, and there may be a third interface between the STC 910 and the programmable switch 930. The service enablers 940a to 940c each are connected to the programmable switch 930.

The STC 910 may be deployed inside a GGSN/PGW 950 as a module, and may interact with the GGSN/PGW 950 by using an interface inside the GGSN/PGW 950. The GGSN/PGW 950 may further be connected to a border router 960.

In FIG. 8, a data packet of an uplink service flow may be directly sent by the GGSN/PGW 850 to the programmable switch 830; and a data packet of a downlink service flow is forwarded by the border router 860 to the programmable switch 830.

In FIG. 9, both a data packet of an uplink service flow and a data packet of a downlink service flow arrive at the GGSN/PGW 950 first, the GGSN/PGW 950 may first forward the data packets to the built-in STC 910, and the STC 910 forwards the data packets to the programmable switch 930. For example, for the first data packet or the first several data packets, the STC 910 may generate a notification message, where the notification message may include service flow category information; the SPC 920 may determine, according to the notification message, a first forwarding entry corresponding to the programmable switch 930. The GGSN/PGW 950 may forward a subsequent data packet to the programmable switch 930 by using the STC, and the programmable switch 930 forwards the subsequent data packet according to the first forwarding entry.

For specific functions and operations of the system 900, reference may be made to the embodiment shown in FIG. 1. To avoid repetition, details are not described herein.

In this embodiment of the present invention, a service flow classifier generates a notification message that includes service category information, where the service flow category information is used to indicate a first service chain corresponding to a service flow; a service path controller generates, according to the notification message, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

FIG. 10 is a schematic block diagram of a service path controller according to an embodiment of the present invention. The SPC 1000 shown in FIG. 10 includes a receiving unit 1010, a generating unit 1020, and a sending unit 1030.

There is a first interface between the receiving unit 1010 and a first STC.

The receiving unit 1010 may receive a notification message from the first service flow classifier by using the first interface, where the notification message includes service flow category information corresponding to a service flow, the service flow category information is used to indicate a first service chain corresponding to the service flow, and the first service chain includes one or more service enablers that are arranged according to a first sequence. The generating unit 1020 may generate, according to the notification message, a first forwarding entry corresponding to each of one or more programmable switches. The sending unit 1030 may send the first forwarding entry corresponding to each programmable switch to the one or more programmable switches, so that the programmable switch forwards a data packet of the service flow according to the first forwarding entry corresponding to the programmable switch, and the one or more service enablers process the data packet of the service flow according to the first sequence.

In this embodiment of the present invention, a notification message that includes service flow category information and is generated by a first service flow classifier is received, where the service flow category information is used to indicate a first service chain that includes one or more service enablers and is corresponding to a service flow; a first forwarding entry corresponding to each of one or more programmable switches is generated according to the notification message; the one or more programmable switches each forward a data packet of the service flow according to their respective corresponding first forwarding entries, so that the one or more service enablers process the data packet of the service flow according to a first sequence. In this way, network reliability can be improved and a network delay can be reduced.

Optionally, in an embodiment, there may be a second interface between the sending unit 1030 and each of h programmable switches. The first service chain may include k service enablers of m service enablers, where the k service enablers in the first service chain are arranged according to the first sequence.

The generating unit 1120 may generate, according to the notification message, a first forwarding entry corresponding to each programmable switch of i programmable switches, where the i programmable switches are connected to at least one of the k service enablers, and the i programmable switches are selected from the h programmable switches, where h and m are positive integers, k is a positive integer less than or equal to m, and i is a positive integer less than or equal to h.

Optionally, in another embodiment, the notification message may further include service flow information corresponding to the service flow, and the service flow information includes at least one of the following: a source Media Access Control MAC address, a destination MAC address, a source Internet Protocol IP address, a destination IP address, a source port number, a destination port number, and a protocol type.

Optionally, in another embodiment, the service flow category information may include a first service chain table, where the first service chain table is used to indicate the first service chain. The generating unit 1020 may generate, according to topology information of a service routing system in which the service path controller is located, the first service chain table, and the service flow information, the first forwarding entry corresponding to each programmable switch of the i programmable switches.

Optionally, in another embodiment, the service flow category information may include a first application category identifier, where the first application category identifier is used to indicate an application category of the service flow.

The generating unit 1020 may determine, according to the first application category identifier and a correspondence between at least one application category identifier and at least one service chain table, a first service chain table corresponding to the first application category identifier, where the first service chain table is used to indicate the first service chain. The generating unit 1020 generates, according to topology information of a service routing system, the first service chain table, and the service flow information, the first forwarding entry corresponding to each programmable switch of the i programmable switches.

Optionally, in another embodiment, the service flow category information may include a first application category identifier.

The generating unit 1020 may determine, according to the first application category identifier and a correspondence between at least one application category identifier and at least one service chain table, a first service chain table corresponding to the first application category identifier, where the first service chain table is used to indicate the first service chain. The generating unit 1020 may generate, according to topology information of a service routing system, the first service chain table, and the first application category identifier, the first forwarding entry corresponding to each programmable switch of the i programmable switches, where the first forwarding entry includes the first application category identifier.

Optionally, in another embodiment, the receiving unit 1010 may further receive service routing rule information before the generating unit 1020 generates the first forwarding entry corresponding to each programmable switch of the i programmable switches, where the service routing rule information includes the foregoing at least one application category identifier, the foregoing at least one service chain table, and the foregoing correspondence.

Optionally, in another embodiment, the receiving unit 1010 may further receive service routing rule information before the generating unit 1020 generates the first forwarding entry corresponding to each programmable switch of the i programmable switches, where the service routing rule information is used to instruct to perform adjustment processing on the foregoing correspondence, and the adjustment processing includes at least one of the following: adding, deleting, and modifying. The generating unit 1020 may further perform adjustment processing on the foregoing correspondence according to the service routing rule information.

Optionally, in another embodiment, the receiving unit 1010 may receive the service routing rule information from the first service flow classifier by using the first interface; or the receiving unit 1010 may receive the service routing rule information from a PCRF device.

Optionally, in another embodiment, the receiving unit 1010 may further receive information about the data packet of the service flow from the j^{th} programmable switch of the h programmable switches by using the second interface, where there is a third interface between the j^{th} programmable switch and the first STC.

The generating unit 1020 may further generate a second forwarding entry according to the information about the data packet of the service flow when the data packet of the service flow needs to be forwarded to the first STC, where the second forwarding entry is used to instruct to forward the data packet of the service flow to the first STC.

The sending unit 1030 may further send the second forwarding entry to the j^{th} programmable switch by using the second interface, so that the j^{th} programmable switch forwards the data packet of the service flow to the first STC according to the second forwarding entry, and the first STC generates the notification message according to the data packet of the service flow.

Optionally, in another embodiment, a forwarding entry corresponding to the data packet of the service flow does not exist on the j^{th} programmable switch; or a forwarding entry corresponding to the data packet of the service flow on the programmable switch instructs the j^{th} programmable switch to send the information about the data packet of the service flow to the SPC 1000.

Optionally, in another embodiment, there is also the first interface between the receiving unit 1010 and a second STC.

For other functions and operations of the service path controller 1000, reference may be made to functions and operations related to the SPCs in the embodiments shown in FIG. 1 to FIG. 9. To avoid repetition, details are not described herein.

FIG. 11 is a schematic block diagram of a service flow classifier according to an embodiment of the present invention. The STC 1100 includes a generating unit 1110 and a sending unit 1120. There is a first interface between the sending unit 1120 and an SPC.

The generating unit 1110 generates a notification message according to a service flow, where the notification message includes service flow category information corresponding to the service flow, the service flow category information is used to indicate a first service chain corresponding to the service flow, and the first service chain includes one or more service enablers that are arranged according to a first sequence. The sending unit 1120 sends the notification message to the SPC by using the first interface.

In this embodiment of the present invention, a notification message that includes service flow category information is generated, where the service flow category information is used to indicate a first service chain corresponding to a service flow; the notification message is sent to a service path controller, so that the service path controller can generate, according to the notification message, a first forwarding entry corresponding to each of one or more programmable switches, the programmable switches forward a data packet of the service flow according to the corresponding first forwarding entries, and one or more service enablers process the data packet of the service flow according to a first sequence. In this way, network reliability can be improved and a network delay can be reduced.

Optionally, in an embodiment, the first service chain includes k service enablers of m service enablers, where the k service enablers in the first service chain are arranged according to the first sequence, m is a positive integer, and k is a positive integer less than or equal to m.

Optionally, in another embodiment, the notification message may further include service flow information corresponding to the service flow, and the service flow information includes at least one of the following: a source Media Access Control MAC address, a destination MAC address, a source Internet Protocol IP address, a destination IP address, a source port number, a destination port number, and a protocol type.

The service flow category information may include a first service chain table, where the first service chain table is used to indicate the first service chain; or the service flow category information may include a first application category identifier, where the first application category identifier is used to indicate an application category of the service flow.

Optionally, in another embodiment, the STC 1100 may further include an encapsulating unit 1140. The service flow category information may include a first application category identifier, the first application category identifier is used to indicate an application category of the service flow, and the first application category identifier is corresponding to the first service chain.

The encapsulating unit 1140 may further encapsulate a data packet of the service flow according to the first application category identifier.

Optionally, in another embodiment, the STC 1100 may further include a receiving unit 1130. There is a third interface between the receiving unit 1130 and the j^{th} programmable switch of h programmable switches, h is a positive integer, and j is a positive integer less than or equal to h.

The receiving unit 1130 may receive the first n data packets of the service flow from the j^{th} programmable switch by using the third interface, where n is a positive integer. The generating unit 1110 may generate the notification message according to the first n data packets.

For other functions and operations of the STC 1100, reference may be made to functions and operations related to the STCs in the embodiments shown in FIG. 1 to FIG. 9. To avoid repetition, details are not described herein.

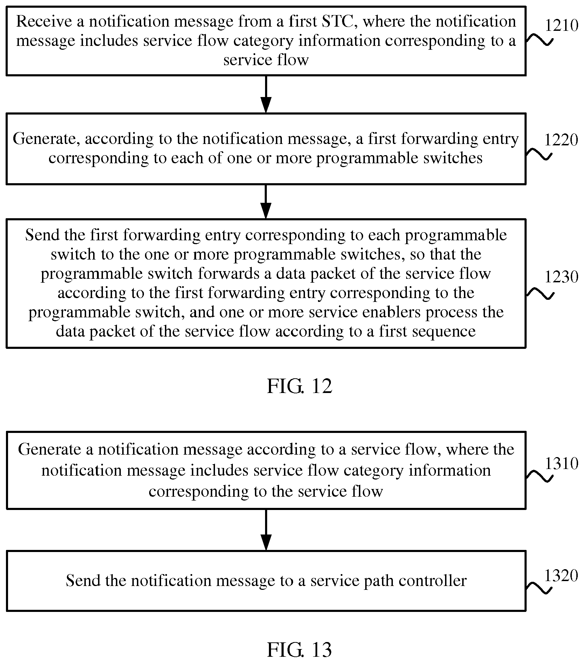

FIG. 12 is a schematic flowchart of a service routing method according to an embodiment of the present invention. The method shown in FIG. 12 is executed by an SPC.

1210. Receive a notification message from a first STC, where the notification message includes service flow category information corresponding to a service flow, the service flow category information is used to indicate a first service chain corresponding to the service flow, and the first service chain includes one or more service enablers that are arranged according to a first sequence.

1220. Generate, according to the notification message, a first forwarding entry corresponding to each of one or more programmable switches.

1230. Send the first forwarding entry corresponding to each programmable switch to the one or more programmable switches, so that the programmable switch forwards a data packet of the service flow according to the first forwarding entry corresponding to the programmable switch, and the one or more service enablers process the data packet of the service flow according to the first sequence.

In this embodiment of the present invention, a notification message that includes service flow category information and is generated by a first service flow classifier is received, where the service flow category information is used to indicate a first service chain that includes one or more service enablers and is corresponding to a service flow; a first forwarding entry corresponding to each of one or more programmable switches is generated according to the notification message; the programmable switches each forward a data packet of the service flow according to their respective corresponding first forwarding entries, so that the one or more service enablers process the data packet of the service flow according to a first sequence. In this way, network reliability can be improved and a network delay can be reduced.

Optionally, in an embodiment, the first service chain may include k service enablers of m service enablers, and the k service enablers in the first service chain are arranged according to the first sequence. In step 1220, the SPC may generate, according to the notification message, a first forwarding entry corresponding to each programmable switch of i programmable switches, where the i programmable switches are connected to at least one of the k service enablers, the i programmable switches are selected from h programmable switches, h and m are positive integers, k is a positive integer less than or equal to m, and i is a positive integer less than or equal to h.

Optionally, in another embodiment, the notification message may further include service flow information corresponding to the service flow, and the service flow information includes at least one of the following: a source Media Access Control MAC address, a destination MAC address, a source Internet Protocol IP address, a destination IP address, a source port number, a destination port number, and a protocol type.

Optionally, in another embodiment, the service flow category information may include a first service chain table, and the first service chain table is used to indicate the first service chain. In step 1220, the SPC may generate, according to topology information of a service routing system, the first service chain table, and the service flow information, the first forwarding entry corresponding to each programmable switch of the i programmable switches.

Optionally, in another embodiment, the service flow category information may include a first application category identifier, and the first application category identifier is used to indicate an application category of the service flow.

In step 1220, the SPC may determine, according to the first application category identifier and a correspondence between at least one application category identifier and at least one service chain table, a first service chain table corresponding to the first application category identifier, where the first service chain table is used to indicate the first service chain. The SPC may generate, according to topology information of a service routing system, the first service chain table, and the service flow information, the first forwarding entry corresponding to each programmable switch of the i programmable switches.

Optionally, in another embodiment, the service flow category information may include a first application category identifier. In step 1220, the SPC may determine, according to the first application category identifier and a correspondence between at least one application category identifier and at least one service chain table, a first service chain table corresponding to the first application category identifier, where the first service chain table is used to indicate the first service chain. The SPC may generate, according to topology information of a service routing system, the first service chain table, and the first application category identifier, the first forwarding entry corresponding to each programmable switch of the i programmable switches, where the first forwarding entry includes the first application category identifier.

Optionally, in another embodiment, the SPC may receive service routing rule information before generating the first forwarding entry corresponding to each programmable switch of the i programmable switches, where the service routing rule information includes the foregoing at least one application category identifier, the foregoing at least one service chain table, and the foregoing correspondence.

Optionally, in another embodiment, the SPC may receive service routing rule information before generating the first forwarding entry corresponding to each programmable switch of the i programmable switches, where the service routing rule information is used to instruct to perform adjustment processing on a second correspondence, and the adjustment processing includes at least one of the following: adding, deleting, and modifying; and may perform adjustment processing on the foregoing correspondence according to the service routing rule information.

Optionally, in another embodiment, the SPC may receive the service routing rule information from the first STC, or the SPC may receive the service routing rule information from a PCRF device.

Optionally, in another embodiment, the SPC may further receive information about the data packet of the service flow from the j^{th} programmable switch of the h programmable switches, where j is a positive integer less than or equal to h. Whenthe data packet of the service flow needs to be forwarded to a first SPC, the SPC may generate a second forwarding entry according to the information about the data packet of the service flow, where the second forwarding entry is used to instruct to forward the data packet of the service flow to the first STC. The SPC may send the second forwarding entry to the j^{th} programmable switch, so that the j^{th} programmable switch forwards the data packet of the service flow to the first STC according to the second forwarding entry, and the first STC generates the notification message according to the data packet of the service flow.

Optionally, in another embodiment, a forwarding entry corresponding to the data packet of the service flow does not exist on the programmable switch; or a forwarding entry corresponding to the data packet of the service flow on the programmable switch instructs the programmable switch to send information about the data packet of the service flow to the service path controller.

For a specific process of the method shown in FIG. 12, reference may be made to functions and operations related to the SPCs in the embodiments shown in FIG. 1 to FIG. 9. To avoid repetition, details are not described herein.

FIG. 13 is a schematic flowchart of a service routing method according to an embodiment of the present invention. The method shown in FIG. 13 is executed by an STC.

1310. Generate a notification message according to a service flow, where the notification message includes service flow category information corresponding to the service flow, the service flow category information is used to indicate a first service chain corresponding to the service flow, and the first service chain includes one or more service enablers that are arranged according to a first sequence.

1320. Send the notification message to a service path controller.

In this embodiment of the present invention, a notification message that includes service flow category information is generated, where the service flow category information is used to indicate a first service chain corresponding to a service flow; the notification message is sent to a service path controller, so that the service path controller can generate, according to the notification message, a first forwarding entry corresponding to each of one or more programmable switches, the programmable switches forward a data packet of the service flow according to the corresponding first forwarding entries, and one or more service enablers process the data packet of the service flow according to a first sequence. In this way, network reliability can be improved and a network delay can be reduced.

Optionally, in an embodiment, the first service chain may include k service enablers of m service enablers, the k service enablers in the first service chain are arranged according to the first sequence, m is a positive integer, and k is a positive integer less than or equal to m.

Optionally, in another embodiment, the notification message further includes service flow information corresponding to the service flow, and the service flow information includes at least one of the following: a source Media Access Control MAC address, a destination MAC address, a source Internet Protocol IP address, a destination IP address, a source port number, a destination port number, and a protocol type. The service flow category information includes a first service chain table, where the first service chain table is used to indicate the first service chain; or the service flow category information includes a first application category identifier, where the first application category identifier is used to indicate an application category of the service flow.

Optionally, in another embodiment, the service flow category information may include a first application category identifier, and the first application category identifier is used to indicate an application category of the service flow.

The STC may further encapsulate a data packet of the service flow according to the first application category identifier.

Optionally, in another embodiment, the STC may receive the data packet of the service flow from the j^{th} programmable switch of h programmable switches, and generate the notification message according to the data packet of the service flow.

For a specific process of the method shown in FIG. 13, reference may be made to functions and operations related to the first STCs in the embodiments shown in FIG. 1 to FIG. 9. To avoid repetition, details are not described herein.

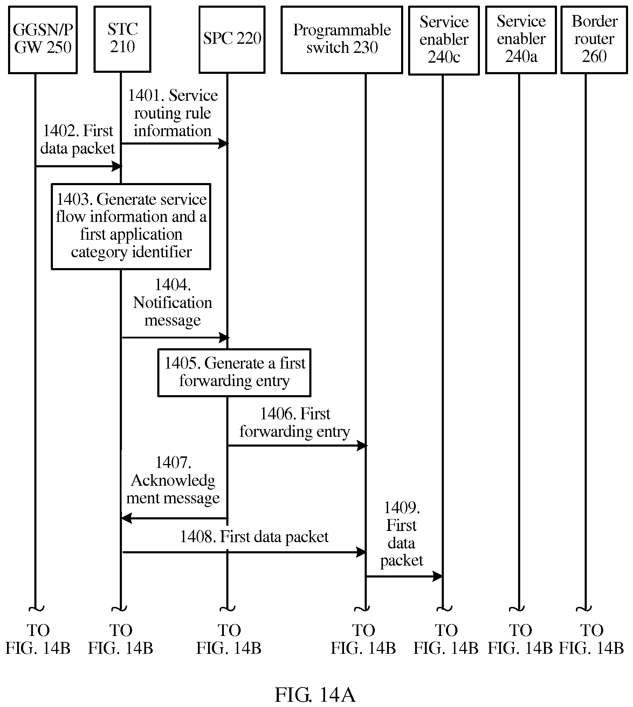

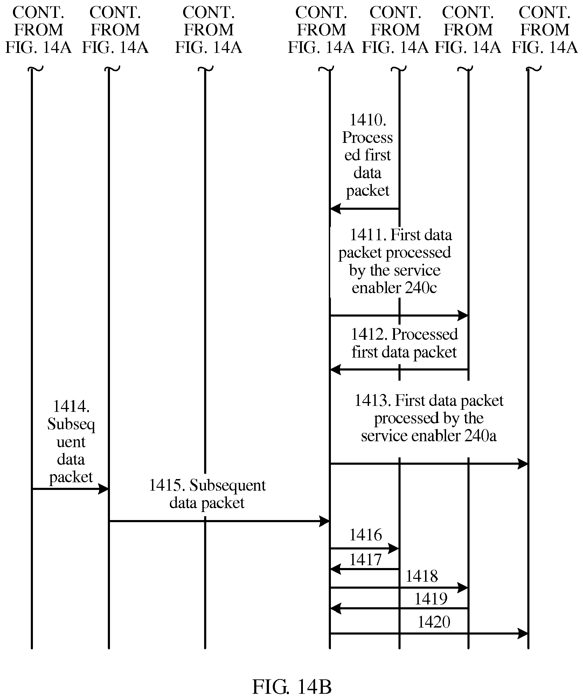

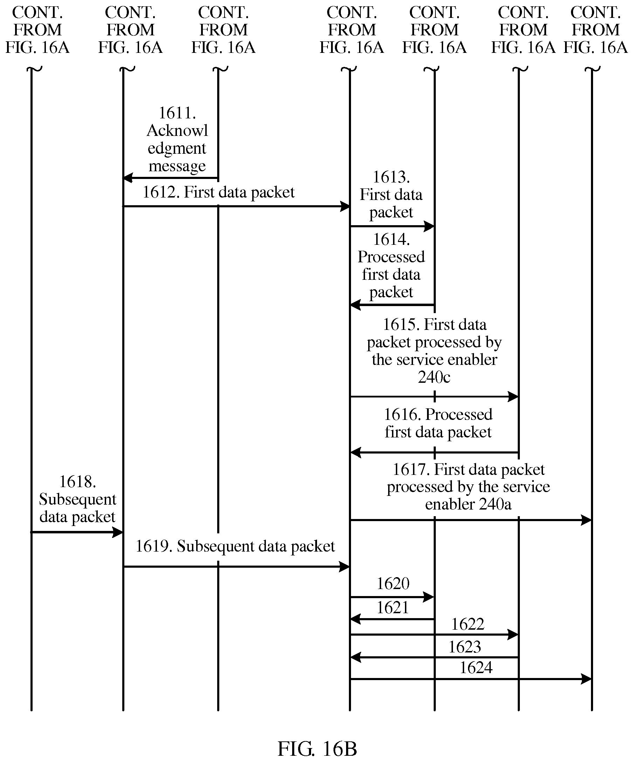

This embodiment of the present invention is described in detail in the following with reference to specific examples. It should be noted that, examples shown in FIG. 14A and FIG. 14B to FIG. 16A and FIG. 16B are merely intended to help a person skilled in the art better understand this embodiment of the present invention, instead of limiting the scope of this embodiment of the present invention.

FIG. 14A and FIG. 14B is a schematic flowchart of a process of a service routing method according to an embodiment of the present invention.

In FIG. 14A and FIG. 14B, a process of processing an uplink service flow is described with reference to the network architecture shown in FIG. 2.

1401. An SPC 220 receives service routing rule information from an STC 210.

The service routing rule information may include at least one application category identifier, at least one service chain table, and a correspondence between the at least one application category identifier and the at least one service chain table. Each service chain table is used to indicate a service chain that includes at least one service enabler of the m service enablers.

The SPC 220 may store the correspondence.

The SPC 220 may acquire pre-stored topology information of a system 200, where the topology information of the system 200 is used to indicate an internal topology and an external connection relationship of the system 200. Then the SPC 220 may generate at least one service routing template according to the at least one service chain table and the topology information, where the at least one service routing template and the at least one service chain table are in a one-to-one correspondence. The SPC 20 may store the at least one service routing template.

1402. The STC 210 receives the first data packet of a service flow from a GGSN/PGW 250.

1403. The STC 210 generates, according to the first data packet, service flow information corresponding to the service flow and a first application category identifier corresponding to the service flow.

For example, the STC 210 may perform DPI processing on an L7 layer of the first data packet to determine the service flow information and service flow category information; or the STC 210 may perform matching on an L3/4 layer of the first data packet to determine the service flow information and service flow category information.

The service flow information may include at least one of IP 7-tuple of the service flow. The first application category identifier may be used to indicate an application category of the service flow. The first application category identifier may be corresponding to a first service chain corresponding to the service flow. Herein, it is assumed that the first service chain includes service enablers 240a and 240c, where the two service enablers in the first service chain are arranged according to a first sequence. Herein, it is assumed that the first sequence is that the service enabler 240c is arranged before the service enabler 240a.

1404. The STC 210 sends a notification message to the SPC 220, where the notification message includes the service flow information and the first application category identifier.

1405. The SPC 220 generates, according to the service flow information, the first application category identifier, and the foregoing correspondence, a first forwarding entry corresponding to a programmable switch 230.

For example, the SPC 220 may determine, according to the first application category identifier and the foregoing correspondence, a first service chain table corresponding to the first application category identifier, where the first service chain table may be used to indicate the first service chain. The SPC 220 may determine, according to the first service chain table, a first service routing template corresponding to the first service chain table, and determine, according to the service flow information and the first service routing template, the first forwarding entry corresponding to the programmable switch 230.

1406. The SPC 220 sends the first forwarding entry to the programmable switch 230.

1407. The SPC 220 sends an acknowledgement message to the STC 210, where the acknowledgement message is used to indicate that the first forwarding entry has already been sent to the programmable switch 230.

1408. The STC 210 sends the buffered first data packet of the service flow to the programmable switch 230 according to the acknowledgement message.

1409. The programmable switch 230 forwards the first data packet to the service enabler 240c according to the first forwarding entry.

1410. The programmable switch 230 receives a processed first data packet from the service enabler 240c.

1411. The programmable switch 230 forwards, according to the first forwarding entry, the first data packet processed by the service enabler 240c to the service enabler 240a.

1412. The programmable switch 230 receives a processed first data packet from the service enabler 240a.

1413. The programmable switch 230 forwards, according to the first forwarding entry, the first data packet processed by the service enabler 240a to a border router 260.

1414. The STC 210 receives a subsequent data packet of the service flow from the GGSN/PGW 250.

1415. The STC 210 forwards the subsequent data packet to the programmable switch 230.

A process of steps 1416 to 1420 is similar to a process of steps 1409 to 11413. To avoid repetition, details are not described herein.

It should be understood that sequence numbers of the foregoing processes do not mean execution sequences, and the execution sequences of the processes should be determined according to functions and internal logic of the processes, but should not be construed as any limitation on an implementation process of this embodiment of the present invention. For example, steps 1408 to 1413 and steps 1414 to 1420 may be performed in parallel.

In this embodiment of the present invention, a service flow classifier generates service flow information and service flow category information that are corresponding to a service flow, where the service flow category information is used to indicate a first service chain corresponding to the service flow; a service path controller generates, according to the service flow information and the service flow category information, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

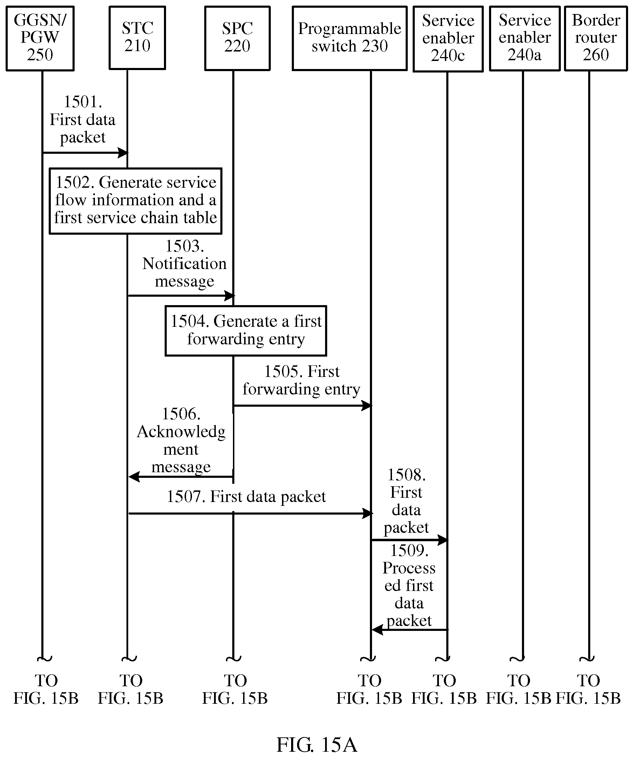

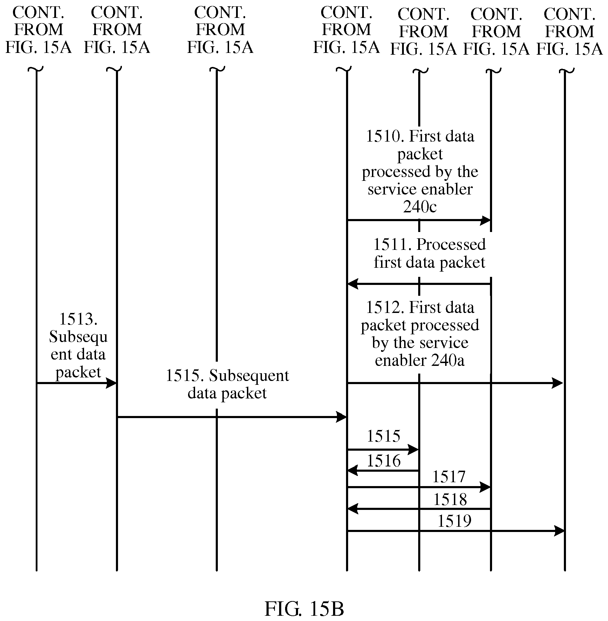

FIG. 15A and FIG. 15B is a schematic flowchart of a process of a service routing method according to another embodiment of the present invention.

In FIG. 15A and FIG. 15B, a process of processing an uplink service flow is described still with reference to the network architecture shown in FIG. 2.

1501. An STC 210 receives the first data packet of a service flow from a GGSN/PGW 250.

1502. The STC 210 generates, according to the first data packet, service flow information corresponding to the service flow and service flow category information corresponding to the service flow.

The service flow information may include at least one of IP 7-tuple of the service flow.

The service flow category information includes a first service chain table, and the first service chain table indicates a first service chain that includes service enablers 240a and 240c. The two service enablers in the first service chain are arranged according to a first sequence. Herein, it is assumed that the first sequence is that the service enabler 240c is arranged before the service enabler 240a.

1503. The STC 210 sends a notification message to an SPC 220, where the notification message includes the foregoing service flow information and the foregoing first service chain table.

1504. The SPC 220 generates, according to the service flow information, the first service chain table, and topology information of a system 200, a first forwarding entry corresponding to a programmable switch 230.

The SPC 220 may further generate a first service routing template according to the topology information of the system 200 and the first service chain table, and store the first service routing template.

When the SPC 220 receives the first service chain table again, the SPC 220 may find the first service routing template from a first correspondence by using the first service chain table, and directly generate the first forwarding entry according to the service flow information and the first service routing template.

Steps 1505 to 1519 are similar to steps 1406 to 1420 shown in FIG. 14A and FIG. 14B. To avoid repetition, details are not described herein.

It should be understood that sequence numbers of the foregoing processes do not mean execution sequences, and the execution sequences of the processes should be determined according to functions and internal logic of the processes, but should not be construed as any limitation on an implementation process of this embodiment of the present invention. For example, steps 1507 to 1512 and steps 1513 to 1519 may be performed in parallel.

In this embodiment of the present invention, a service flow classifier generates service flow information and service flow category information that are corresponding to a service flow, where the service flow category information is used to indicate a first service chain corresponding to the service flow; a service path controller generates, according to the service flow information and the service flow category information, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

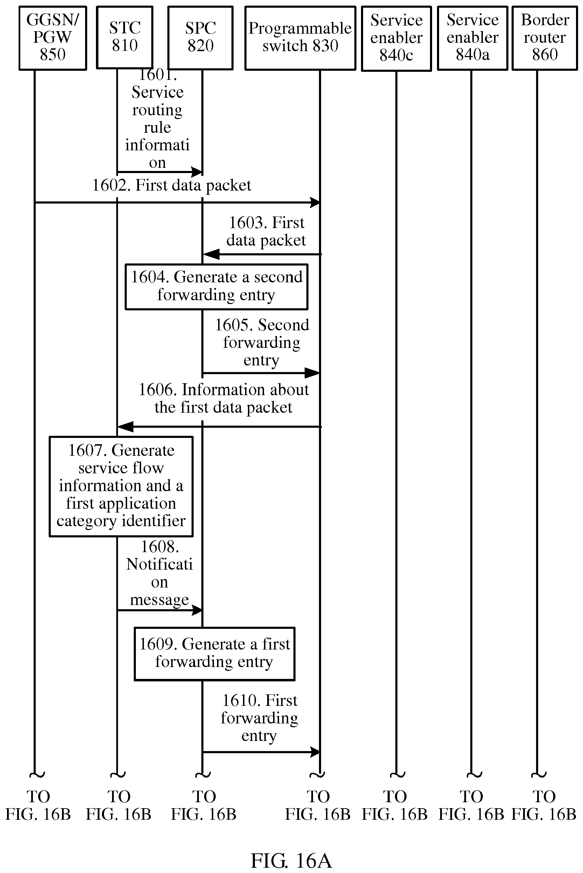

FIG. 16A and FIG. 16B is a schematic flowchart of a process of a service routing method according to another embodiment of the present invention.

In FIG. 16A and FIG. 16B, a process of processing an uplink service flow is described with reference to the network architecture shown in FIG. 8.

1601. An SPC 820 receives service routing rule information from an STC 810.

The service routing rule information may include at least one application category identifier, at least one service chain table, and a correspondence between the at least one application category identifier and the at least one service chain table. Herein, it is assumed that the correspondence includes two application category identifiers and their respective corresponding service chain tables. For example, (1) App ID 1="video", and content of a service chain table corresponding to the App ID 1 is: service chain 1="service enabler 840a, service enabler 840c"; (2) App ID 2="no match", and content of a service chain table corresponding to the App ID 2 is: service chain 2="STC 810", where App ID 2="no match" may represent an application category identifier corresponding to the first data packet.

The SPC 820 may store the correspondence.

1602. A programmable switch 830 receives the first data packet of a service flow from a GGSN/PGW 850.

Because there is a fourth interface between the GGSN/PGW 850 and the programmable switch 830, the GGSN/PGW 850 may directly forward the first data packet of the service flow to the programmable switch 830 by using the fourth interface.

1603. The programmable switch 830 determines that the first data packet is received and there is no corresponding first forwarding entry, and sends information about the first data packet to the SPC 820.

For example, the programmable switch 830 may encapsulate the information about the first data packet into a Packet_in message, and send the Packet_in message to the SPC 820.

1604. The SPC 820 receives the information about the first data packet, and generates a second forwarding entry according to the information about the first data packet, where the second forwarding entry is used to instruct to send the first data packet to the STC 810.

For example, if the SPC 820 receives the information about the first data packet and determines that the first data packet is received, it may be determined that an application category identifier of the data packet is the App ID 2. The second forwarding entry is generated according to the service chain 2 corresponding to the App ID 2.

1605. The SPC 820 sends the second forwarding entry to the programmable switch 830.

1606. The programmable switch 830 sends the first data packet to the STC 810 according to the second forwarding entry.

Steps 1607 to 1624 are similar to steps 1403 to 1420 shown in FIG. 14A and FIG. 14B. To avoid repetition, details are not described herein.

It should be understood that sequence numbers of the foregoing processes do not mean execution sequences, and the execution sequences of the processes should be determined according to functions and internal logic of the processes, but should not be construed as any limitation on an implementation process of this embodiment of the present invention. For example, steps 1612 to 1617 and steps 1618 to 1624 may be performed in parallel.

In this embodiment of the present invention, a service flow classifier generates service flow information and service flow category information that are corresponding to a service flow, where the service flow category information is used to indicate a first service chain corresponding to the service flow; a service path controller generates, according to the service flow information and the service flow category information, a first forwarding entry corresponding to a programmable switch; the programmable switch forwards a data packet of the service flow according to the first forwarding entry, so that service enablers in the first service chain process the data packet of the service flow according to a first sequence. In this way, network reliability can be improved and a network delay can be reduced.

It should be understood that in FIG. 14A and FIG. 14B to FIG. 16A and FIG. 16B, processing of an uplink service flow is used as an example for description. However, the embodiments of the present invention are also applicable to a downlink service flow. The STC may further add, to the service flow information, an information element used to indicate an uplink service flow or a downlink service flow. In the embodiments of the present invention, processing of an uplink service flow and processing of a downlink service flow may be performed in parallel.

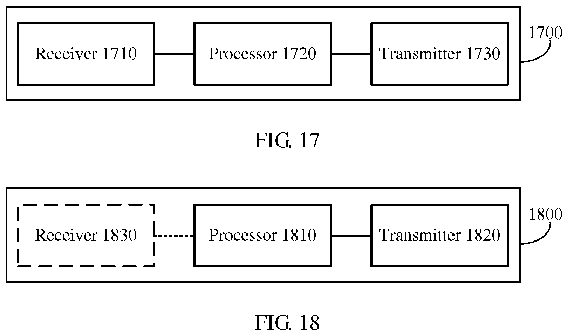

FIG. 17 is a schematic block diagram of a service path controller according to another embodiment of the present invention. The SPC 1700 shown in FIG. 17 includes a receiver 1710, a processor 1720, and a transmitter 1730.

There is a first interface between the receiver 1710 and a first STC, and there is a second interface between the transmitter 1730 and each of h programmable switches.

The receiver 1710 may receive a notification message from the first service flow classifier by using the first interface, where the notification message includes service flow category information corresponding to a service flow, the service flow category information is used to indicate a first service chain corresponding to the service flow, the first service chain includes k service enablers of m service enablers, and the k service enablers in the first service chain are arranged according to a first sequence. The processor 1720 may generate, according to the notification message, a first forwarding entry corresponding to each programmable switch of i programmable switches, where the i programmable switches are connected to at least one of the k service enablers, and the i programmable switches are selected from the h programmable switches. The transmitter 1730 may send the first forwarding entry corresponding to each programmable switch to each programmable switch of the i programmable switches by using the second interface, so that each programmable switch forwards a data packet of the service flow according to the first forwarding entry corresponding to each programmable switch, and the k service enablers process the data packet of the service flow according to the first sequence, where h and m are positive integers, k is a positive integer less than or equal to m, and i is a positive integer less than or equal to h.

In this embodiment of the present invention, a notification message that includes service flow category information and is generated by a first service flow classifier is received, where the service flow category information is used to indicate a first service chain that includes k service enablers and is corresponding to a service flow; a first forwarding entry corresponding to each of i programmable switches that are connected to the k service enablers is generated according to the notification message; the i programmable switches each forward a data packet of the service flow according to their respective corresponding first forwarding entries, so that the k service enablers process the data packet of the service flow according to a first sequence. In this way, network reliability can be improved and a network delay can be reduced.

Optionally, in an embodiment, the notification message may further include service flow information corresponding to the service flow, and the service flow information includes at least one of the following: a source Media Access Control MAC address, a destination MAC address, a source Internet Protocol IP address, a destination IP address, a source port number, a destination port number, and a protocol type.

Optionally, in another embodiment, the service flow category information may include a first service chain table, where the first service chain table is used to indicate the first service chain. The processor 1720 may generate, according to topology information of a service routing system in which the service path controller is located, the first service chain table, and the service flow information, the first forwarding entry corresponding to each programmable switch of the i programmable switches, where the topology information is used to indicate an internal topology structure of the service routing system and an external connection relationship of the service routing system.

Optionally, in another embodiment, the service flow category information may include a first application category identifier, where the first application category identifier is used to indicate an application category of the service flow.

The processor 1720 may determine, according to the first application category identifier and a correspondence between at least one application category identifier and at least one service chain table, a first service chain table corresponding to the first application category identifier, where the first service chain table is used to indicate the first service chain. The processor 1720 generates, according to topology information of a service routing system, the first service chain table, and the service flow information, the first forwarding entry corresponding to each programmable switch of the i programmable switches, where the topology information is used to indicate an internal topology structure of the service routing system and an external connection relationship of the service routing system.

Optionally, in another embodiment, the service flow category information may include a first application category identifier.

The processor 1720 may determine, according to the first application category identifier and a correspondence between at least one application category identifier and at least one service chain table, a first service chain table corresponding to the first application category identifier, where the first service chain table is used to indicate the first service chain. The processor 1720 may generate, according to topology information of a service routing system, the first service chain table, and the first application category identifier, the first forwarding entry corresponding to each programmable switch of the i programmable switches, where the first forwarding entry includes the first application category identifier.

Optionally, in another embodiment, the receiver 1710 may further receive service routing rule information before the processor 1720 generates the first forwarding entry corresponding to each programmable switch of the i programmable switches, where the service routing rule information includes the foregoing at least one application category identifier, the foregoing at least one service chain table, and the foregoing correspondence.

Optionally, in another embodiment, the receiver 1710 may further receive service routing rule information before the processor 1720 generates the first forwarding entry corresponding to each programmable switch of the i programmable switches, where the service routing rule information is used to instruct to perform adjustment processing on the foregoing correspondence, and the adjustment processing includes at least one of the following: adding, deleting, and modifying. The processor 1720 may further perform adjustment processing on the foregoing correspondence according to the service routing rule information.

Optionally, in another embodiment, the receiver 1710 may receive the service routing rule information from the first service flow classifier by using the first interface; or the receiver 1710 may receive the service routing rule information from a PCRF device.

Optionally, in another embodiment, the receiver 1710 may further receive information about the first data packet of the service flow from the j^{th} programmable switch of the h programmable switches by using the second interface, where there is a third interface between the j^{th} programmable switch and the first STC.

The processor 1720 may further generate a second forwarding entry according to the information about the first data packet whenit is determined that the first data packet needs to be forwarded to the first STC, where the second forwarding entry is used to instruct to forward the data packet of the service flow to the first STC.

The transmitter 1730 may further send the second forwarding entry to the j^{th} programmable switch by using the second interface, so that the j^{th} programmable switch forwards the first n data packets of the service flow to the first STC according to the second forwarding entry, and the first STC generates the notification message according to the first n data packet, where n is a positive integer.

Optionally, in another embodiment, there is also the first interface between the receiver 1710 and a second STC.

For other functions and operations of the SPC 1700, reference may be made to functions and operations related to the SPCs in the embodiments shown in FIG. 1 to FIG. 9. To avoid repetition, details are not described herein.

FIG. 18 is a schematic block diagram of a service flow classifier according to another embodiment of the present invention. The STC 1800 includes a processor 1810 and a transmitter 1820. There is a first interface between the transmitter 1820 and an SPC.

The processor 1810 generates a notification message according to a service flow, where the notification message includes service flow category information corresponding to the service flow, the service flow category information is used to indicate a first service chain corresponding to the service flow, and the first service chain includes k service enablers of m service enablers, where the k service enablers in the first service chain are arranged according to a first sequence, m is a positive integer, and k is a positive integer less than and equal to m. The transmitter 1820 sends the notification message to the SPC by using the first interface.

In this embodiment of the present invention, a notification message that includes service flow category information is generated, where the service flow category information is used to indicate a first service chain corresponding to a service flow; the notification message is sent to a service path controller, so that the service path controller can generate, according to the notification message, a first forwarding entry corresponding to each of programmable switches that are connected to k service enablers, the programmable switches forward a data packet of the service flow according to the corresponding first forwarding entries, and the service enablers in the first service chain process the data packet of the service flow according to a first sequence. In this way, network reliability can be improved and a network delay can be reduced.

Optionally, in an embodiment, the notification message may further include service flow information corresponding to the service flow, and the service flow information includes at least one of the following: a source Media Access Control MAC address, a destination MAC address, a source Internet Protocol IP address, a destination IP address, a source port number, a destination port number, and a protocol type.

The service flow category information may include a first service chain table, where the first service chain table is used to indicate the first service chain; or the service flow category information may include a first application category identifier, where the first application category identifier is used to indicate an application category of the service flow.

Optionally, in another embodiment, the service flow category information may include a first application category identifier, where the first application category identifier is used to indicate an application category of the service flow, and the first application category identifier is corresponding to the first service chain.

The processor 1810 may further encapsulate a data packet of the service flow according to the first application category identifier.

Optionally, in another embodiment, the STC 1800 may further include a receiver 1830. There is a third interface between the receiver 1830 and the j^{th} programmable switch of h programmable switches, h is a positive integer, and j is a positive integer less than or equal to h.

The receiver 1830 may receive the first n data packets of the service flow from the j^{th} programmable switch by using the third interface, where n is a positive integer. The processor 1810 may generate the notification message according to the first n data packets.

For other functions and operations of the STC 1800, reference may be made to functions and operations related to the STCs in the embodiments shown in FIG. 1 to FIG. 9. To avoid repetition, details are not described herein.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such implementation goes beyond the scope of the present invention.

It may be clearly understood by a person skilled in the art that, for the purpose of a convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service routing system (100), comprising:
a first service flow classifier (110), a service path controller (120), h programmable switches (130), and m service enablers (140), wherein there is a first interface between the first service flow classifier and the service path controller, there is a second interface between the service path controller and each of the h programmable switches, there is a third interface between the first service flow classifier and the j^{th} programmable switch of the h programmable switches, each service enabler of the m service enablers is connected to one of the h programmable switches, and the h programmable switches are interconnected, wherein the service enabler comprises at least one of a video optimizer, a service flow compressor, a data cache, a deep packet inspector, and a HTTP header enhancer;
wherein the first service flow classifier (110) is configured to generate a notification message according to a service flow, wherein the notification message comprises service flow category information corresponding to the service flow, the service flow category information is used to indicate a first service chain corresponding to the service flow, the first service chain comprises k service enablers of the m service enablers, and the k service enablers in the first service chain are arranged according to a first sequence,
and wherein said first service flow classifier (110) is configured to send said notification message to the service path controller (120); the service path controller (120) is configured to: receive the notification message from the first service flow classifier by using the first interface, and generate, according to the notification message, a first forwarding entry corresponding to each programmable switch of i programmable switches, wherein the i programmable switches are connected to at least one of the k service enablers, and the i programmable switches are selected from the h programmable switches; and to send the first forwarding entry corresponding to each programmable switch to the one or more programmable switches ; and each programmable switch of the i programmable switches is configured to:
receive the first forwarding entry corresponding to each programmable switch from the service path controller by using the second interface, and forward a data packet of the service flow according to the first forwarding entry corresponding to each programmable switch, so that the k service enablers process the data packet of the service flow according to the first sequence;
wherein h, m, and j are all positive integers, k is a positive integer less than or equal to m, and i is a positive integer less than or equal to h.

2. A service path controller, comprising:
a receiving unit (1010), a generating unit (1020), and a sending unit (1030), wherein there is a first interface between the receiving unit and a first service flow classifier;
wherein the receiving unit (1010) is configured to receive a notification message from the first service flow classifier by using the first interface, wherein the notification message comprises service flow category information corresponding to a service flow, the service flow category information is used to indicate a first service chain corresponding to the service flow, and the first service chain comprises one or more service enablers that are arranged according to a first sequence;
the generating unit (1020) is configured to generate, according to the notification message, a first forwarding entry corresponding to each of one or more programmable switches; and
the sending unit (1030) is configured to send the first forwarding entry corresponding to each programmable switch to the one or more programmable switches, so that the programmable switch forwards a data packet of the service flow according to the first forwarding entry corresponding to the programmable switch, and the one or more service enablers process the data packet of the service flow according to the first sequence;
wherein the first service chain comprises k service enablers of m service enablers, wherein the k service enablers in the first service chain are arranged according to the first sequence,
wherein m is a positive integer, k is a positive integer less than or equal to m, and
wherein the service enabler comprises at least one of a video optimizer, a service flow compressor, a data cache, a deep packet inspector, and a HTTP header enhancer.

3. The service path controller according to claim 2, wherein there is a second interface between the sending unit and each of h programmable switches; and
the generating unit is specifically configured to generate, according to the notification message, a first forwarding entry corresponding to each programmable switch of i programmable switches, wherein the i programmable switches are connected to at least one of the k service enablers, and the i programmable switches are selected from the h programmable switches;
wherein h is a positive integer, and i is a positive integer less than or equal to h.

4. The service path controller according to claim 3, wherein the notification message further comprises service flow information corresponding to the service flow, and the service flow information comprises at least one of the following: a source Media Access Control MAC address, a destination MAC address, a source Internet Protocol IP address, a destination IP address, a source port number, a destination port number, and a protocol type.

5. The service path controller according to claim 4, wherein the service flow category information comprises a first service chain table, and the first service chain table is used to indicate the first service chain; and
the generating unit is specifically configured to generate, according to topology information of a service routing system in which the service path controller is located, the first service chain table, and the service flow information, the first forwarding entry corresponding to each programmable switch of the i programmable switches.

6. The service path controller according to claim 4, wherein the service flow category information comprises a first application category identifier, and the first application category identifier is used to indicate an application category of the service flow; and
the generating unit is specifically configured to:
determine, according to the first application category identifier and a correspondence between at least one application category identifier and at least one service chain table, a first service chain table corresponding to the first application category identifier, wherein the first service chain table is used to indicate the first service chain; and
generate, according to topology information of a service routing system, the first service chain table, and the service flow information, the first forwarding entry corresponding to each programmable switch of the i programmable switches.

7. The service path controller according to claim 6, wherein
the receiving unit is further configured to receive service routing rule information before the generating unit generates the first forwarding entry corresponding to each programmable switch of the i programmable switches, wherein the service routing rule information comprises the at least one application category identifier, the at least one service chain table, and the correspondence.

8. A service flow classifier, comprising:
a generating unit (1110) and a sending unit (1120), wherein there is a first interface between the sending unit (1120) and a service path controller;
wherein the generating unit is configured to generate a notification message according to a service flow, wherein the notification message comprises service flow category information corresponding to the service flow, the service flow category information is used to indicate a first service chain corresponding to the service flow, and the first service chain comprises one or more service enablers that are arranged according to a first sequence; and
the sending unit is configured to send the notification message to the service path controller by using the first interface;
wherein the first service chain comprises k service enablers of m service enablers, the k service enablers in the first service chain are arranged according to the first sequence, m is a positive integer, and k is a positive integer less than or equal to m, and
wherein the service enabler comprises at least one of a video optimizer, a service flow compressor, a data cache, a deep packet inspector, and a HTTP header enhancer.

9. The service flow classifier according to claim 8 wherein the notification message further comprises service flow information corresponding to the service flow, and the service flow information comprises at least one of the following: a source Media Access Control MAC address, a destination MAC address, a source Internet Protocol IP address, a destination IP address, a source port number, a destination port number, and a protocol type; and
the service flow category information comprises a first service chain table, wherein the first service chain table is used to indicate the first service chain; or the service flow category information comprises a first application category identifier, wherein the first application category identifier is used to indicate an application category of the service flow.

10. The service flow classifier according to claim 8, further comprising an encapsulating unit (1140);
wherein the service flow category information comprises a first application category identifier, wherein the first application category identifier is used to indicate an application category of the service flow, and the first application category identifier is corresponding to the first service chain; and
the encapsulating unit (1140) is configured to encapsulate a data packet of the service flow according to the first application category identifier.

11. The service flow classifier according to any one of claims 8 to 10, further comprising a receiving unit (1130), wherein there is a third interface between the receiving unit (1130) and the j^{th} programmable switch of h programmable switches, h is a positive integer, and j is a positive integer less than or equal to h;
wherein the receiving unit (1130) is configured to receive the data packet of the service flow from the j^{th} programmable switch by using the third interface; and
the determining unit is specifically configured to generate the notification message according to the data packet of the service flow.

12. A service routing method, comprising the steps of:
receiving (1210) a notification message from a first service flow classifier, wherein the notification message comprises service flow category information corresponding to a service flow, the service flow category information is used to indicate a first service chain corresponding to the service flow, and the first service chain comprises one or more service enablers that are arranged according to a first sequence;
generating (1220), according to the notification message, a first forwarding entry corresponding to each of one or more programmable switches; and
sending (1230) the first forwarding entry corresponding to each programmable switch to the one or more programmable switches, so that the programmable switch forwards a data packet of the service flow according to the first forwarding entry corresponding to the programmable switch, and the one or more service enablers process the data packet of the service flow according to the first sequence;
wherein the first service chain comprises k service enablers of m service enablers, the k service enablers in the first service chain are arranged according to the first sequence, m is a positive integer, and k is a positive integer less than or equal to m, and
wherein the service enabler comprises at least one of a video optimizer, a service flow compressor, a data cache, a deep packet inspector, and a HTTP header enhancer.

13. The method according to claim 12, wherein the notification message further comprises service flow information corresponding to the service flow, and the service flow information comprises at least one of the following: a source Media Access Control MAC address, a destination MAC address, a source Internet Protocol IP address, a destination IP address, a source port number, a destination port number, and a protocol type.

14. The method according to claim 13, wherein the service flow category information comprises a first service chain table, and the first service chain table is used to indicate the first service chain; and
the generating, according to the notification message, a first forwarding entry corresponding to each programmable switch of i programmable switches comprises:
generating, according to topology information of a service routing system, the first service chain table, and the service flow information, the first forwarding entry corresponding to each programmable switch of the i programmable switches.

15. The method according to claim 14, wherein the service flow category information comprises a first application category identifier, and the first application category identifier is used to indicate an application category of the service flow; and
the generating, according to the notification message, a first forwarding entry corresponding to each programmable switch of i programmable switches comprises:
determining, according to the first application category identifier and a correspondence between at least one application category identifier and at least one service chain table, a first service chain table corresponding to the first application category identifier, wherein the first service chain table is used to indicate the first service chain; and
generating, according to topology information of a service routing system, the first service chain table, and the service flow information, the first forwarding entry corresponding to each programmable switch of the i programmable switches.

## Patentansprüche

1. Dienstroutingsystem (100), das Folgendes umfasst:
einen ersten Dienstablaufklassifizierer (110), einen Dienstpfadcontroller (120), h programmierbare Schalter (130) und m Dienstfreigeber (140), wobei es eine erste Schnittstelle zwischen dem ersten Dienstablaufklassifizierer und dem Dienstpfadcontroller gibt, es eine zweite Schnittstelle zwischen dem Dienstpfadcontroller und jedem der h programmierbaren Schalter gibt, es eine dritte Schnittstelle zwischen dem ersten Dienstablaufklassifizierer und dem j-ten programmierbaren Schalter der h programmierbaren Schalter gibt, jeder Dienstfreigeber der m Dienstfreigeber mit einem der h programmierbaren Schalter verbunden ist und die h programmierbaren Schalter verschaltet sind, wobei der Dienstfreigeber einen Videooptimierer und/oder einen Dienstablaufkompressor und/oder einen Datencache und/oder einen "Deep Packet Inspector" und/oder einen HTTP-Header-Aufwerter umfasst;
wobei der erste Dienstablaufklassifizierer (110) ausgelegt ist zum Erzeugen einer Benachrichtigungsnachricht gemäß einem Dienstablauf, wobei die Benachrichtigungsnachricht dem Dienstablauf entsprechende Dienstablaufkategorieinformationen umfasst, die Dienstablaufkategorieinformationen verwendet werden zum Angeben einer dem Dienstablauf entsprechenden ersten Dienstkette, die erste Dienstkette k Dienstfreigeber der m Dienstfreigeber umfasst und die k Dienstfreigeber in der ersten Dienstkette gemäß einer ersten Abfolge angeordnet sind, und wobei der erste Dienstablaufklassifizierer (110) ausgelegt ist zum Senden der Benachrichtigungsnachricht an den Dienstpfadcontroller (120);
der Dienstpfadcontroller (120) ausgelegt ist zum: Empfangen der Benachrichtigungsnachricht von dem ersten Dienstablaufklassifizierer unter Verwendung der ersten Schnittstelle und Erzeugen, gemäß der Benachrichtigungsnachricht, eines jedem programmierbaren Schalter der i programmierbaren Schalter entsprechenden ersten Weiterleitungseintrags, wobei die i programmierbaren Schalter mit mindestens einem der k Dienstfreigeber verbunden sind und die i programmierbaren Schalter aus den h programmierbaren Schaltern ausgewählt sind; und zum Senden des jedem programmierbaren Schalter entsprechenden Weiterleitungseintrags an den einen oder die mehreren programmierbaren Schalter; und
jeder programmierbare Schalter der i programmierbaren Schalter ausgelegt ist zum:
Empfangen des jedem programmierbaren Schalter entsprechenden ersten Weiterleitungseintrags von dem Dienstpfadcontroller unter Verwendung der zweiten Schnittstelle und Weiterleiten eines Datenpakets des Dienstablaufs gemäß dem jedem programmierbaren Schalter entsprechenden ersten Weiterleitungseintrag, so dass die k Dienstfreigeber das Datenpaket des Dienstablaufs gemäß der ersten Abfolge verarbeiten;
wobei alle h, m und j positive ganze Zahlen sind, k eine positive ganze Zahl kleiner oder gleich m ist und i eine positive ganze Zahl kleiner oder gleich h ist.

2. Dienstpfadcontroller, der Folgendes umfasst:
eine Empfangseinheit (1010), eine Erzeugungseinheit (1020) und eine Sendeeinheit (1030), wobei es eine Schnittstelle zwischen der Empfangseinheit und einem ersten Dienstablaufklassifizierer gibt;
wobei die Empfangseinheit (1010) ausgelegt ist zum Empfangen einer Benachrichtigungsnachricht von dem ersten Dienstablaufklassifizierer unter Verwendung der ersten Schnittstelle, wobei die Benachrichtigungsnachricht einem Dienstablauf entsprechende Dienstablaufkategorieinformationen umfasst, die Dienstablaufkategorieinformationen verwendet werden zum Angeben einer dem Dienstablauf entsprechenden ersten Dienstkette und die erste Dienstkette einen oder mehrere Dienstfreigeber umfasst, die gemäß einer ersten Abfolge angeordnet sind;
die Erzeugungseinheit (1020) ausgelegt ist zum Erzeugen, gemäß der Benachrichtigungsnachricht, eines jedem von einem oder mehreren programmierbaren Schaltern entsprechenden ersten Weiterleitungseintrags; und
die Sendeeinheit (1030) ausgelegt ist zum Senden des jedem programmierbaren Schalter entsprechenden ersten Weiterleitungseintrags an den einen oder die mehreren programmierbaren Schalter, so dass der programmierbare Schalter ein Datenpaket des Dienstablaufs gemäß dem dem programmierbaren Schalter entsprechenden ersten Weiterleitungseintrag weiterleitet, und der eine oder die mehreren Dienstfreigeber das Datenpaket des Dienstablaufs gemäß der ersten Abfolge verarbeiten;
wobei die erste Dienstkette k Dienstfreigeber von m Dienstfreigebern umfasst, wobei die k Dienstfreigeber in der ersten Dienstkette gemäß der ersten Abfolge angeordnet sind,
wobei m eine positive ganze Zahl ist, k eine positive ganze Zahl kleiner oder gleich m ist und
wobei der Dienstfreigeber einen Videooptimierer und/oder einen Dienstablaufkompressor und/oder einen Datencache und/oder einen "Deep Packet Inspector" und/oder einen HTTP-Header-Aufwerter umfasst.

3. Dienstpfadcontroller nach Anspruch 2, wobei es eine zweite Schnittstelle zwischen der Sendeeinheit und jedem von h programmierbaren Schaltern gibt; und
die Erzeugungseinheit insbesondere ausgelegt ist zum Erzeugen, gemäß der Benachrichtigungsnachricht, eines jedem programmierbaren Schalter von i programmierbaren Schaltern entsprechenden ersten Weiterleitungseintrags, wobei die i programmierbaren Schalter mit mindestens einem der k Dienstfreigeber verbunden sind und die i programmierbaren Schalter aus den h programmierbaren Schaltern ausgewählt sind;
wobei h eine positive ganze Zahl ist und i eine positive ganze Zahl kleiner oder gleich h ist.

4. Dienstpfadcontroller nach Anspruch 3, wobei die Benachrichtigungsnachricht ferner dem Dienstablauf entsprechende Dienstablaufinformationen umfasst und die Dienstablaufinformationen mindestens eines der Folgenden umfassen: eine Quellen-Medienzugriffssteuerung-Adresse bzw. eine Quellen-MAC-Adresse, eine Ziel-MAC-Adresse, eine Quellen-Internet-Protokoll-Adresse bzw. Quellen-IP-Adresse, eine Ziel-IP-Adresse, eine Quellen-Portnummer, eine Ziel-Portnummer und eine Protokollart.

5. Dienstpfadcontroller nach Anspruch 4, wobei die Dienstablaufkategorieinformationen eine erste Dienstkettentabelle umfassen und die erste Dienstkettentabelle verwendet wird zum Angeben der ersten Dienstkette; und die Erzeugungseinheit insbesondere ausgelegt ist zum Erzeugen, gemäß Topologieinformationen eines Dienstroutingsystems, in welchem sich der Dienstpfadcontroller befindet, der ersten Dienstkettentabelle und der Dienstablaufinformationen, des jedem programmierbaren Schalter der i programmierbaren Schalter entsprechenden ersten Weiterleitungseintrags.

6. Dienstpfadcontroller nach Anspruch 4, wobei die Dienstablaufkategorieinformationen eine erste Anwendungskategoriekennung umfassen und die erste Anwendungskategoriekennung verwendet wird zum Angeben einer Anwendungskategorie des Dienstablaufs; und
die Erzeugungseinheit insbesondere ausgelegt ist zum:
Bestimmen, gemäß der ersten Anwendungskategoriekennung und einer Übereinstimmung zwischen mindestens einer Anwendungskategoriekennung und mindestens einer Dienstkettentabelle, einer der ersten Anwendungskategoriekennung entsprechenden ersten Dienstkettentabelle, wobei die erste Dienstkettentabelle verwendet wird zum Angeben der ersten Dienstkette; und
Erzeugen, gemäß den Topologieinformationen eines Dienstroutingsystems, der ersten Dienstkettentabelle und der Dienstablaufinformationen, des jedem programmierbaren Schalter der i programmierbaren Schalter entsprechenden ersten Weiterleitungseintrags.

7. Dienstpfadcontroller nach Anspruch 6, wobei
die Empfangseinheit ferner ausgelegt ist zum Empfangen von Dienstroutingregelinformationen bevor die Erzeugungseinheit den jedem programmierbaren Schalter der i programmierbaren Schalter entsprechenden ersten Weiterleitungseintrag erzeugt, wobei die Dienstroutingregelinformationen die mindestens eine Anwendungskategoriekennung, die mindestens eine Dienstkettentabelle und die Übereinstimmung umfasst.

8. Dienstablaufklassifizierer, der Folgendes umfasst:
eine Erzeugungseinheit (1110) und eine Sendeeinheit (1120), wobei es eine erste Schnittstelle zwischen der Sendeeinheit (1120) und einem Dienstpfadcontroller gibt;
wobei die Erzeugungseinheit ausgelegt ist zum Erzeugen einer Benachrichtigungsnachricht gemäß einem Dienstablauf, wobei die Benachrichtigungsnachricht dem Dienstablauf entsprechende Dienstablaufkategorieinformationen umfasst, die Dienstablaufkategorieinformationen verwendet werden zum Angeben einer dem Dienstablauf entsprechenden ersten Dienstkette und die erste Dienstkette einen oder mehrere Dienstfreigeber, die gemäß einer ersten Abfolge angeordnet sind, umfasst; und
die Sendeeinheit ausgelegt ist zum Senden der Benachrichtigungsnachricht an den Dienstpfadcontroller unter Verwendung der ersten Schnittstelle;
wobei die erste Dienstkette k Dienstfreigeber von m Dienstfreigebern umfasst, die k Dienstfreigeber in der ersten Dienstkette gemäß der ersten Abfolge angeordnet sind, m eine positive ganze Zahl ist und k eine positive ganze Zahl kleiner oder gleich m ist, und
wobei der Dienstfreigeber einen Videooptimierer und/oder einen Dienstablaufkompressor und/oder einen Datencache und/oder einen "Deep Packet Inspector" und/oder einen HTTP-Header-Aufwerter umfasst.

9. Dienstablaufklassifizierer nach Anspruch 8, wobei die Benachrichtigungsnachricht ferner dem Dienstablauf entsprechende Dienstablaufinformationen umfasst und die Dienstablaufinformationen mindestens eines der Folgenden umfassen: eine Quellen-Medienzugriffssteuerung-Adresse bzw. eine Quellen-MAC-Adresse, eine Ziel-MAC-Adresse, eine Quellen-Internet-Protokoll-Adresse bzw. Quellen-IP-Adresse, eine Ziel-IP-Adresse, eine Quellen-Portnummer, eine Ziel-Portnummer und eine Protokollart; und
die Dienstablaufkategorieinformationen eine erste Dienstkettentabelle umfassen, wobei die erste Dienstkettentabelle verwendet wird zum Angeben der ersten Dienstkette; oder die Dienstablaufkategorieinformationen umfassen eine erste Anwendungskategoriekennung, wobei die erste Anwendungskategoriekennung verwendet wird zum Angeben einer Anwendungskategorie des Dienstablaufs.

10. Dienstablaufklassifizierer nach Anspruch 8, ferner umfassend eine Einkapselungseinheit (1140);
wobei die Dienstablaufkategorieinformationen eine erste Anwendungskategoriekennung umfassen, wobei die erste Anwendungskategoriekennung verwendet wird zum Angeben einer Anwendungskategorie des Dienstablaufs und die erste Anwendungskategoriekennung der ersten Dienstkette entspricht; und
die Einkapselungseinheit (1140) ausgelegt ist zum Einkapseln eines Datenpakets des Dienstablaufs gemäß der ersten Anwendungskategoriekennung.

11. Dienstablaufklassifizierer nach einem der Ansprüche 8 bis 10, ferner umfassend eine Empfangseinheit (1130), wobei es eine dritte Schnittstelle zwischen der Empfangseinheit (1130) und dem j-ten programmierbaren Schalter von h programmierbaren Schaltern gibt, h eine positive ganze Zahl ist und j eine positive ganze Zahl kleiner oder gleich h ist;
wobei die Empfangseinheit (1130) ausgelegt ist zum Empfangen des Datenpakets des Dienstablaufs von dem j-ten programmierbaren Schalter unter Verwendung der dritten Schnittstelle; und
die Bestimmungseinheit insbesondere ausgelegt ist zum Erzeugen der Benachrichtigungsnachricht gemäß dem Datenpaket des Dienstablaufs.

12. Dienstroutingverfahren, das die folgenden Schritte umfasst:
Empfangen (1210) einer Benachrichtigungsnachricht von einem ersten Dienstablaufklassifizierer, wobei die Benachrichtigungsnachricht einem Dienstablauf entsprechende Dienstablaufkategorieinformationen umfasst, die Dienstablaufkategorieinformationen verwendet werden zum Angeben einer dem Dienstablauf entsprechenden ersten Dienstkette und die erste Dienstkette einen oder mehrere Dienstfreigeber umfasst, die gemäß einer ersten Abfolge angeordnet sind;
Erzeugen (1220), gemäß der Benachrichtigungsnachricht, eines jedem von einem oder mehreren programmierbaren Schaltern entsprechenden ersten Weiterleitungseintrags; und
Senden (1230) des jedem programmierbaren Schalter entsprechenden ersten Weiterleitungseintrags an den einen oder die mehreren programmierbaren Schalter, so dass der programmierbare Schalter ein Datenpaket des Dienstablaufs gemäß dem dem programmierbaren Schalter entsprechenden ersten Weiterleitungseintrag weiterleitet und der eine oder die mehreren Dienstfreigeber das Datenpaket des Dienstablaufs gemäß der ersten Abfolge verarbeiten;
wobei die erste Dienstkette k Dienstfreigeber von m Dienstfreigebern umfasst, die k Dienstfreigeber in der ersten Dienstkette gemäß der ersten Abfolge angeordnet sind, m eine positive ganze Zahl ist und k eine positive ganze Zahl kleiner oder gleich m ist, und
wobei der Dienstfreigeber einen Videooptimierer und/oder einen Dienstablaufkompressor und/oder einen Datencache und/oder einen "Deep Packet Inspector" und/oder einen HTTP-Header-Aufwerter umfasst.

13. Verfahren nach Anspruch 12, wobei die Benachrichtigungsnachricht ferner dem Dienstablauf entsprechende Dienstablaufinformationen umfasst und die Dienstablaufinformationen mindestens eines der Folgenden umfassen: eine Quellen-Medienzugriffssteuerung-Adresse bzw. eine Quellen-MAC-Adresse, eine Ziel-MAC-Adresse, eine Quellen-Internet-Protokoll-Adresse bzw. Quellen-IP-Adresse, eine Ziel-IP-Adresse, eine Quellen-Portnummer, eine Ziel-Portnummer und eine Protokollart.

14. Verfahren nach Anspruch 13, wobei die Dienstablaufkategorieinformationen eine erste Dienstkettentabelle umfassen und die erste Dienstkettentabelle verwendet wird zum Angeben der ersten Dienstkette; und
das Erzeugen, gemäß der Benachrichtigungsnachricht, eines jedem programmierbaren Schalter von i programmierbaren Schaltern entsprechenden ersten Weiterleitungseintrags Folgendes umfasst:
Erzeugen, gemäß Topologieinformationen eines Dienstroutingsystems, der ersten Dienstkettentabelle und der Dienstablaufinformationen, des jedem programmierbaren Schalter der i programmierbaren Schalter entsprechenden ersten Weiterleitungseintrags.

15. Verfahren nach Anspruch 14, wobei die Dienstablaufkategorieinformationen eine erste Anwendungskategoriekennung umfassen und die erste Anwendungskategoriekennung verwendet wird zum Angeben einer Anwendungskategorie des Dienstablaufs; und
das Erzeugen, gemäß der Benachrichtigungsnachricht, eines jedem programmierbaren Schalter von i programmierbaren Schaltern entsprechenden ersten Weiterleitungseintrags Folgendes umfasst:
Bestimmen, gemäß der ersten Anwendungskategoriekennung und einer Übereinstimmung zwischen mindestens einer Anwendungskategoriekennung und mindestens einer Dienstkettentabelle, einer der ersten Anwendungskategoriekennung entsprechenden ersten Dienstkettentabelle, wobei die erste Dienstkettentabelle verwendet wird zum Angeben der ersten Dienstkette; und
Erzeugen, gemäß Topologieinformationen eines Dienstroutingsystems, der ersten Dienstkettentabelle und der Dienstablaufinformationen, des jedem programmierbaren Schalter der i programmierbaren Schalter entsprechenden ersten Weiterleitungseintrags.

## Revendications

1. Système de routage de service (100), comprenant :
un premier classificateur de flux de service (110), une unité de commande de chemin de service (120), h commutateurs programmables (130) et m facilitateurs de service (140), une première interface étant présente entre le premier classificateur de flux de service et l'unité de commande de chemin de service, une deuxième interface étant présente entre l'unité de commande de chemin de service et chacun des h commutateurs programmables, une troisième interface étant présente entre le premier classificateur de flux de service et le j-ième commutateur programmable parmi les h commutateurs programmables, chaque facilitateur de service parmi les m facilitateurs de service étant connecté à l'un des h commutateurs programmables et les h commutateurs programmables étant interconnectés, le facilitateur de service comprenant au moins un des éléments suivants : un optimiseur vidéo, un compresseur de flux de service, un cache de données, un inspecteur de paquet en profondeur et un rehausseur d'en-tête HTTP ;
le premier classificateur de flux de service (110) étant configuré pour générer un message de notification selon un flux de service, le message de notification comprenant des informations de catégorie de flux de service correspondant au flux de service, les informations de catégorie de flux de service servant à indiquer une première chaîne de service correspondant au flux de service, la première chaîne de service comprenant k facilitateurs de service parmi les m facilitateurs de service et les k facilitateurs de service dans la première chaîne de service étant agencés selon une première séquence, et ledit premier classificateur de flux de service (110) étant configuré pour envoyer ledit message de notification à l'unité de commande de chemin de service (120) ;
l'unité de commande de chemin de service (120) étant configurée pour : recevoir le message de notification depuis le premier classificateur de flux de service au moyen de la première interface, et générer, selon le message de notification, une première entrée de retransmission correspondant à chaque commutateur programmable parmi i commutateurs programmables, les i commutateurs programmables étant connectés à au moins un des k facilitateurs de service et les i commutateurs programmables étant sélectionnés parmi les h commutateurs programmables ; et pour envoyer la première entrée de retransmission correspondant à chaque commutateur programmable au ou aux commutateurs programmables ; et
chaque commutateur programmable parmi les i commutateurs programmables étant configuré pour : recevoir la première entrée de retransmission correspondant à chaque commutateur programmable depuis l'unité de commande de chemin de service au moyen de la deuxième interface, et retransmettre un paquet de données du flux de service selon la première entrée de retransmission correspondant à chaque commutateur programmable, de sorte que les k facilitateurs de service traitent le paquet de données du flux de service selon la première séquence ;
h, m et j étant tous des entiers positifs, k étant un entier positif inférieur ou égal à m et i étant un entier positif inférieur ou égal à h.

2. Unité de commande de chemin de service, comprenant :
une unité de réception (1010), une unité de génération (1020) et une unité d'envoi (1030), une première interface étant présente entre l'unité de réception et un premier classificateur de flux de service ;
l'unité de réception (1010) étant configurée pour recevoir un message de notification depuis le premier classificateur de flux de service au moyen de la première interface, le message de notification comprenant des informations de catégorie de flux de service correspondant à un flux de service, les informations de catégorie de flux de service servant à indiquer une première chaîne de service correspondant au flux de service, la première chaîne de service comprenant un ou plusieurs facilitateurs de service agencés selon une première séquence ;
l'unité de génération (1020) étant configurée pour générer, selon le message de notification, une première entrée de retransmission correspondant à chacun parmi un ou plusieurs commutateurs programmables ; et
l'unité d'envoi (1030) étant configurée pour envoyer la première entrée de retransmission correspondant à chaque commutateur programmable au ou aux commutateurs programmables, de sorte que le commutateur programmable retransmette un paquet de données du flux de service selon la première entrée de retransmission correspondant au commutateur programmable et que le ou les facilitateurs de service traitent le paquet de données du flux de service selon la première séquence ;
la première chaîne de service comprenant k facilitateurs de service parmi m facilitateurs de service, les k facilitateurs de service dans la première chaîne de service étant agencés selon la première séquence,
m étant un entier positif, k étant un entier positif inférieur ou égal à m, et
le facilitateur de service comprenant au moins un des éléments suivants : un optimiseur vidéo, un compresseur de flux de service, un cache de données, un inspecteur de paquet en profondeur et un rehausseur d'en-tête HTTP.

3. Unité de commande de chemin de service selon la revendication 2, dans laquelle une deuxième interface est présente entre l'unité d'envoi et chacun parmi h commutateurs programmables ; et
l'unité de génération est plus particulièrement configurée pour générer, selon le message de notification, une première entrée de retransmission correspondant à chaque commutateur programmable parmi i commutateurs programmables, les i commutateurs programmables étant connectés à au moins un des k facilitateurs de service et les i commutateurs programmables étant sélectionnés parmi les h commutateurs programmables ;
h étant un entier positif et i étant un entier positif inférieur ou égal à h.

4. Unité de commande de chemin de service selon la revendication 3, dans laquelle le message de notification comprend en outre des informations de flux de service correspondant au flux de service, et les informations de flux de service comprennent au moins un des éléments suivants : une adresse source de commande d'accès au support physique, notée MAC, une adresse de destination MAC, une adresse source de protocole Internet, noté IP, une adresse de destination IP, un numéro de port source, un numéro de port de destination et un type de protocole.

5. Unité de commande de chemin de service selon la revendication 4, dans laquelle les informations de catégorie de flux de service comprennent une première table de chaîne de service et la première table de chaîne de service sert à indiquer la première chaîne de service ; et
l'unité de génération est plus particulièrement configurée pour générer, selon des informations de topologie relatives à un système de routage de service dans lequel l'unité de commande de chemin de service est implantée, la première table de chaîne de service et les informations de flux de service, la première entrée de retransmission correspondant à chaque commutateur programmable parmi les i commutateurs programmables.

6. Unité de commande de chemin de service selon la revendication 4, dans laquelle les informations de catégorie de flux de service comprennent un premier identifiant de catégorie d'application, et le premier identifiant de catégorie d'application sert à indiquer une catégorie d'application du flux de service ; et
l'unité de génération est plus particulièrement configurée pour :
déterminer, selon le premier identifiant de catégorie d'application et une correspondance entre au moins un identifiant de catégorie d'application et au moins une table de chaîne de service, une première table de chaîne de service correspondant au premier identifiant de catégorie d'application, la première table de chaîne de service servant à indiquer la première chaîne de service ; et
générer, selon des informations de topologie relatives à un système de routage de service, la première table de chaîne de service et les informations de flux de service, la première entrée de retransmission correspondant à chaque commutateur programmable parmi les i commutateurs programmables.

7. Unité de commande de chemin de service selon la revendication 6, dans laquelle l'unité de réception est configurée en outre pour recevoir des informations de règle de routage de service avant que l'unité de génération ne génère la première entrée de retransmission correspondant à chaque commutateur programmable parmi les i commutateurs programmables, les informations de règle de routage de service comprenant l'au moins un identifiant de catégorie d'application, l'au moins une table de chaîne de service et la correspondance.

8. Classificateur de flux de service, comprenant :
une unité de génération (1110) et une unité d'envoi (1120), une première interface étant présente entre l'unité d'envoi (1120) et une unité de commande de chemin de service ;
l'unité de génération étant configurée pour générer un message de notification selon un flux de service, le message de notification comprenant des informations de catégorie de flux de service correspondant au flux de service, les informations de catégorie de flux de service servant à indiquer une première chaîne de service correspondant au flux de service, la première chaîne de service comprenant un ou plusieurs facilitateurs de service agencés selon une première séquence ; et
l'unité d'envoi étant configurée pour envoyer le message de notification à l'unité de commande de chemin de service au moyen de la première interface ;
la première chaîne de service comprenant k facilitateurs de service parmi m facilitateurs de service, les k facilitateurs de service dans la première chaîne de service étant agencés selon la première séquence, m étant un entier positif et k étant un entier positif inférieur ou égal à m, et
le facilitateur de service comprenant au moins un des éléments suivants : un optimiseur vidéo, un compresseur de flux de service, un cache de données, un inspecteur de paquet en profondeur et un rehausseur d'en-tête HTTP.

9. Classificateur de flux de service selon la revendication 8, dans lequel le message de notification comprend en outre des informations de flux de service correspondant au flux de service, et les informations de flux de service comprennent au moins un des éléments suivants : une adresse source de commande d'accès au support physique, notée MAC, une adresse de destination MAC, une adresse source de protocole Internet, noté IP, une adresse de destination IP, un numéro de port source, un numéro de port de destination et un type de protocole ; et
les informations de catégorie de flux de service comprennent une première table de chaîne de service, la première table de chaîne de service servant à indiquer la première chaîne de service ; ou les informations de catégorie de flux de service comprennent un premier identifiant de catégorie d'application, le premier identifiant de catégorie d'application servant à indiquer une catégorie d'application du flux de service.

10. Classificateur de flux de service selon la revendication 8, comprenant en outre une unité d'encapsulation (1140) ;
les informations de catégorie de flux de service comprenant un premier identifiant de catégorie d'application, le premier identifiant de catégorie d'application servant à indiquer une catégorie d'application du flux de service, et le premier identifiant de catégorie d'application correspondant à la première chaîne de service ; et
l'unité d'encapsulation (1140) étant configurée pour encapsuler un paquet de données du flux de service selon le premier identifiant de catégorie d'application.

11. Classificateur de flux de service selon l'une quelconque des revendications 8 à 10, comprenant en outre une unité de réception (1130), une troisième interface étant présente entre l'unité de réception (1130) et le j-ième commutateur programmable parmi h commutateurs programmables, h étant un entier positif et j étant un entier positif inférieur ou égal à h ;
l'unité de réception (1130) étant configurée pour recevoir le paquet de données du flux de service depuis le j-ième commutateur programmable au moyen de la troisième interface ; et
l'unité de détermination étant plus particulièrement configurée pour générer le message de notification selon le paquet de données du flux de service.

12. Procédé de routage de service, comprenant les étapes suivantes :
réception (1210) d'un message de notification depuis un premier classificateur de flux de service, le message de notification comprenant des informations de catégorie de flux de service correspondant à un flux de service, les informations de catégorie de flux de service servant à indiquer une première chaîne de service correspondant au flux de service et la première chaîne de service comprenant un ou plusieurs facilitateurs de service agencés selon une première séquence ;
génération (1220), selon le message de notification, d'une première entrée de retransmission correspondant à chacun parmi un ou plusieurs commutateurs programmables ; et
envoi (1230) de la première entrée de retransmission correspondant à chaque commutateur programmable au ou aux commutateurs programmables, de sorte que le commutateur programmable retransmette un paquet de données du flux de service selon la première entrée de retransmission correspondant au commutateur programmable et que le ou les facilitateurs de service traitent le paquet de données du flux de service selon la première séquence ;
la première chaîne de service comprenant k facilitateurs de service parmi m facilitateurs de service, les k facilitateurs de service dans la première chaîne de service étant agencés selon la première séquence, m étant un entier positif, k étant un entier positif inférieur ou égal à m, et
le facilitateur de service comprenant au moins un des éléments suivants : un optimiseur vidéo, un compresseur de flux de service, un cache de données, un inspecteur de paquet en profondeur et un rehausseur d'en-tête HTTP.

13. Procédé selon la revendication 12, dans lequel le message de notification comprend en outre des informations de flux de service correspondant au flux de service, et les informations de flux de service comprennent au moins un des éléments suivants : une adresse source de commande d'accès au support physique, notée MAC, une adresse de destination MAC, une adresse source de protocole Internet, noté IP, une adresse de destination IP, un numéro de port source, un numéro de port de destination et un type de protocole.

14. Procédé selon la revendication 13, dans lequel les informations de catégorie de flux de service comprennent une première table de chaîne de service et la première table de chaîne de service sert à indiquer la première chaîne de service ; et
l'étape de génération, selon le message de notification, d'une première entrée de retransmission correspondant à chaque commutateur programmable parmi i commutateurs programmables comprend l'étape suivante :
génération, selon des informations de topologie relatives à un système de routage de service, la première table de chaîne de service et les informations de flux de service, de la première entrée de retransmission correspondant à chaque commutateur programmable parmi les i commutateurs programmables.

15. Procédé selon la revendication 14, dans lequel les informations de catégorie de flux de service comprennent un premier identifiant de catégorie d'application, et le premier identifiant de catégorie d'application sert à indiquer une catégorie d'application du flux de service ; et
l'étape de génération, selon le message de notification, d'une première entrée de retransmission correspondant à chaque commutateur programmable parmi i commutateurs programmables comprend les étapes suivantes :
détermination, selon le premier identifiant de catégorie d'application et une correspondance entre au moins un identifiant de catégorie d'application et au moins une table de chaîne de service, d'une première table de chaîne de service correspondant au premier identifiant de catégorie d'application, la première table de chaîne de service servant à indiquer la première chaîne de service ; et
génération, selon des informations de topologie relatives à un système de routage de service, la première table de chaîne de service et les informations de flux de service, de la première entrée de retransmission correspondant à chaque commutateur programmable parmi les i commutateurs programmables.
